# EUROPEAN PATENT APPLICATION

(11) **EP 4 843 807 A1**
(43) Date of publication of application: **25.11.2026**
(21) Application number: 26179156.0
(22) Date of filing: 18.05.2026
(51) Int. Cl.: B60K 6/365, B60K 6/52, B60K 6/383, B60K 6/445, B60K 6/448, B60K 6/485, B60W 10/06, B60W 10/08, B60W 10/26, B60W 10/115, B60W 20/10, B60W 20/13, B60W 20/40, B60W 30/18, B60K 6/26, B60K 6/54

(54) **VEHICLE DRIVE APPARATUS**

(30) Priority: 19.05.2025 JP 2025083636
(71) Applicant: Toyota Jidosha Kabushiki Kaisha, Toyota-shi, Aichi-ken 471-8571 (JP)
(72) Inventor: HARA, Hisayuki, Toyota-shi, 471-8571 (JP); IMAMURA, Tatsuya, Toyota-shi, 471-8571 (JP); ENDO, Takahito, Toyota-shi, 471-8571 (JP)
(74) Representative: D Young & Co LLP

(57) **Abstract**

It is provided a vehicle drive apparatus wherein: a differential mechanism includes three rotating elements including a first rotating element, a second rotating element, and a third rotating element, wherein an engine and a first motor are coupled to the first rotating element; a second motor is coupled to the second rotating element; and a first drive shaft is coupled to the third rotating element, wherein a third motor is coupled to a second drive shaft, and wherein a controller controls the engine to set in an operating state and controls the first motor, the second motor, and the third motor using power output from the engine to move the vehicle in a backward direction when the vehicle drive apparatus drives the vehicle in the backward direction and electric power available from an energy storage device is less than a predetermined electric-power threshold.

## Description

### FIELD OF THE INVENTION

The present invention relates to a vehicle drive apparatus comprising an engine, three motors, a differential mechanism, drive shafts for driving front and rear wheels, respectively, and a controller.

### BACKGROUND OF THE INVENTION

A vehicle drive apparatus is known that includes an engine, a first motor, a second motor, a third motor, a differential mechanism, an energy storage device, a first drive shaft for driving either front wheels or rear wheels, and a second drive shaft for driving the other of the front wheels and the rear wheels. For example, the vehicle drive apparatus described in Patent Document 1 is one such apparatus.

### PRIOR ART DOCUMENT

### PATENT DOCUMENT

[Patent Document 1]

### U.S. Patent No. 8,512,189

### SUMMARY OF THE INVENTION

Incidentally, in the vehicle drive apparatus described in Patent Document 1, a configuration is conceivable in which the engine and the first motor are coupled to a first rotating element of the differential mechanism, the second motor is coupled to a second rotating element of the differential mechanism, the first drive shaft is coupled to a third rotating element of the differential mechanism, and the third motor is coupled to the second drive shaft. In such a configuration of the vehicle drive apparatus, if the power available from the energy storage device is low when the vehicle is moved in the backward direction, there is a risk of shortage of driving force.

The present invention has been made in view of the circumstances described above, and an object thereof is to provide a vehicle drive apparatus capable of suppressing a shortage of driving force when the vehicle is moved in the backward direction.

According to a first aspect of the invention, there is provided a vehicle drive apparatus includes: an engine; a first motor; a second motor; a third motor; a differential mechanism; an energy storage device for supplying electric power to and receiving electric power from each of the first motor, the second motor, and the third motor; a first drive shaft for driving either front wheels or rear wheels; a second drive shaft for driving the other of the front wheels and the rear wheels; and a controller for controlling the engine, the first motor, the second motor, and the third motor, wherein (a) the differential mechanism includes three rotating elements including a first rotating element, a second rotating element, and a third rotating element, wherein (b) the engine and the first motor are coupled to the first rotating element; the second motor is coupled to the second rotating element; and the first drive shaft is coupled to the third rotating element, wherein (c) the third motor is coupled to the second drive shaft, and wherein (d) the controller controls the engine to set in an operating state and controls the first motor, the second motor, and the third motor using power output from the engine to move a vehicle in a backward direction when the vehicle drive apparatus drives the vehicle in the backward direction and electric power available from the energy storage device is less than a predetermined electric-power threshold.

According to a second aspect of the invention, in the vehicle drive apparatus according to the first aspect of the invention, there is further provided a vehicle drive apparatus, wherein (a) when the vehicle drive apparatus drives the vehicle in the backward direction, (a1) the controller controls the first motor, the second motor, and the third motor to set the engine in a non-operating state and moves the vehicle in the backward direction without using power output from the engine when electric power available from the energy storage device is greater than or equal to a predetermined electric-power threshold and the state of charge of the energy storage device is greater than or equal to a predetermined state-of-charge threshold, and wherein (a2) when the vehicle drive apparatus drives the vehicle in the backward direction, the controller controls the first motor, the second motor, and the third motor to set the engine in an operating state and uses power output from the engine to move the vehicle in the backward direction when electric power available from the energy storage device is greater than or equal to the predetermined electric-power threshold and the state of charge of the energy storage device is less than the predetermined state-of-charge threshold.

According to a third aspect of the invention, in the vehicle drive apparatus according to the first or second aspect of the invention, there is further provided a vehicle drive apparatus, the controller causes the first motor, the second motor, and the third motor to generate negative torque while allowing the engine to be back-driven when the controller sets the engine in a non-operating state and moves the vehicle in the backward direction without using power output from the engine.

According to a fourth aspect of the invention, in the vehicle drive apparatus according to the third aspect of the invention, there is further provided a vehicle drive apparatus, the controller controls a distribution ratio between power consumption by the second motor and power consumption by the third motor to a predetermined distribution ratio that reduces the sum of losses in the second motor and the third motor.

According to a fifth aspect of the invention, in the vehicle drive apparatus according to the first or second aspect of the invention, there is further provided a vehicle drive apparatus, the controller causes the first motor, the second motor, and the third motor to generate negative torque when the controller sets the engine in an operating state and moves the vehicle in the backward direction using power output from the engine.

According to a sixth aspect of the invention, in the vehicle drive apparatus according to the fifth aspect of the invention, there is further provided a vehicle drive apparatus, the controller controls a distribution ratio between power consumption by the second motor and power consumption by the third motor to a predetermined distribution ratio that reduces the sum of losses in the second motor and the third motor.

According to a seventh aspect of the invention, in the vehicle drive apparatus according to the fifth or sixth aspect of the invention, there is further provided a vehicle drive apparatus, (a) the differential mechanism is a single-pinion type planetary gear device having a sun gear, a carrier, a ring gear, and a pinion, wherein (b) the first rotating element is the ring gear; (c) the second rotating element is the sun gear; and (d) the third rotating element is the carrier, and wherein (e) the controller controls the engine, the first motor, and the second motor by temporarily relaxing a predetermined allowable rotational speed for the rotational speed of the pinion when the controller sets the engine in an operating state and moves the vehicle in the backward direction using power output from the engine.

According to a eighth aspect of the invention, in the vehicle drive apparatus according to the fifth or sixth aspect of the invention, there is further provided a vehicle drive apparatus, (a) the differential mechanism is a double-pinion type planetary gear device having a sun gear, a carrier, a ring gear, and paired pinions, wherein (b) the first rotating element is the carrier; (c) the second rotating element is the sun gear; and (d) the third rotating element is the ring gear, and wherein (e) the controller controls the engine, the first motor, and the second motor by temporarily relaxing a predetermined allowable rotational speed for the rotational speed of the paired pinions when the controller sets the engine in an operating state and moves the vehicle in the backward direction using power output from the engine.

In the vehicle drive apparatus according to the first aspect of the invention, it includes: an engine; a first motor; a second motor; a third motor; a differential mechanism; an energy storage device for supplying electric power to and receiving electric power from each of the first motor, the second motor, and the third motor; a first drive shaft for driving either front wheels or rear wheels; a second drive shaft for driving the other of the front wheels and the rear wheels; and a controller for controlling the engine, the first motor, the second motor, and the third motor, wherein (a) the differential mechanism includes three rotating elements including a first rotating element, a second rotating element, and a third rotating element, wherein (b) the engine and the first motor are coupled to the first rotating element; the second motor is coupled to the second rotating element; and the first drive shaft is coupled to the third rotating element, wherein (c) the third motor is coupled to the second drive shaft, and wherein (d) the controller controls the engine to set in an operating state and controls the first motor, the second motor, and the third motor using power output from the engine to move a vehicle in a backward direction when the vehicle drive apparatus drives the vehicle in the backward direction and electric power available from the energy storage device is less than a predetermined electric-power threshold. By virtue of the above configuration (d), if the power available from the energy storage device is less than the predetermined electric-power threshold, the engine is brought into an operating state and the vehicle is moved in the backward direction, thus suppressing a shortage in driving force compared to when the vehicle is moved in the backward direction with the engine in a non-operating state.

According to a second aspect of the invention, in the vehicle drive apparatus according to the first aspect of the invention, (a) when the vehicle drive apparatus drives the vehicle in the backward direction, (a1) the controller controls the first motor, the second motor, and the third motor to set the engine in a non-operating state and moves the vehicle in the backward direction without using power output from the engine when electric power available from the energy storage device is greater than or equal to a predetermined electric-power threshold and the state of charge of the energy storage device is greater than or equal to a predetermined state-of-charge threshold, and wherein (a2) when the vehicle drive apparatus drives the vehicle in the backward direction, the controller controls the first motor, the second motor, and the third motor to set the engine in an operating state and uses power output from the engine to move the vehicle in the backward direction when electric power available from the energy storage device is greater than or equal to the predetermined electric-power threshold and the state of charge of the energy storage device is less than the predetermined state-of-charge threshold. By virtue of the above configuration (a1), if the state of charge of the energy storage device is equal to or greater than a predetermined SOC threshold, the engine is brought into a non-operating state and the vehicle is moved in the backward direction, thus suppressing the fuel consumption of the engine compared to when the vehicle is moved in the backward direction with the engine in an operating state. With the above configuration (a2), if the state of charge of the energy storage device is below the predetermined SOC threshold, the engine is brought into an operating state and the vehicle is moved in the backward direction, thus suppressing an excessive reduction in the state of charge of the energy storage device compared to when the vehicle is moved in the backward direction with the engine in a non-operating state. In this way, fuel consumption of the engine is suppressed while suppressing an excessive reduction in the state of charge of the energy storage device, depending on the state of charge of the energy storage device.

According to a third aspect of the invention, in the vehicle drive apparatus according to the first or second aspect of the invention, the controller causes the first motor, the second motor, and the third motor to generate negative torque while allowing the engine to be back-driven when the controller sets the engine in a non-operating state and moves the vehicle in the backward direction without using power output from the engine. Since the engine is back-driven when the vehicle is moved in the backward direction without using power output from the engine, the driving force becomes greater than when the engine is not back-driven.

According to a fourth aspect of the invention, in the vehicle drive apparatus according to the third aspect of the invention, the controller controls a distribution ratio between power consumption by the second motor and power consumption by the third motor to a predetermined distribution ratio that reduces the sum of losses in the second motor and the third motor. In this way, by controlling the distribution ratio between the power consumption by the second motor and the power consumption by the third motor to a predetermined distribution ratio, the driving force is increased while losses are suppressed.

According to a fifth aspect of the invention, in the vehicle drive apparatus according to the first or second aspect of the invention, the controller causes the first motor, the second motor, and the third motor to generate negative torque when the controller sets the engine in an operating state and moves the vehicle in the backward direction using power output from the engine. Since negative torque is generated in the first motor, the second motor, and the third motor when the vehicle is moved in the backward direction using the power output from the engine, the driving force is increased compared to when negative torque is not generated in any of the first motor, the second motor, and the third motor.

According to a sixth aspect of the invention, in the vehicle drive apparatus according to the fifth aspect of the invention, the controller controls a distribution ratio between power consumption by the second motor and power consumption by the third motor to a predetermined distribution ratio that reduces the sum of losses in the second motor and the third motor. eIn this way, by controlling the distribution ratio between the power consumption by the second motor and the power consumption by the third motor to a predetermined distribution ratio, the driving force is increased while losses are suppressed.

According to a seventh aspect of the invention, in the vehicle drive apparatus according to the fifth or sixth aspect of the invention, (a) the differential mechanism is a single-pinion type planetary gear device having a sun gear, a carrier, a ring gear, and a pinion, wherein (b) the first rotating element is the ring gear; (c) the second rotating element is the sun gear; and (d) the third rotating element is the carrier, and wherein (e) the controller controls the engine, the first motor, and the second motor by temporarily relaxing a predetermined allowable rotational speed for the rotational speed of the pinion when the controller sets the engine in an operating state and moves the vehicle in the backward direction using power output from the engine. By virtue of the above configuration (e), when the vehicle is moved in the backward direction using the power output from the engine, a predetermined allowable rotational speed for the rotational speed of the pinion is temporarily relaxed, so that the rotational speed of the engine can be increased to a higher level than in a case where the relaxation is not provided. By increasing the rotational speed of the engine, the driving force is further increased.

According to a eighth aspect of the invention, in the vehicle drive apparatus according to the fifth or sixth aspect of the invention, (a) the differential mechanism is a double-pinion type planetary gear device having a sun gear, a carrier, a ring gear, and paired pinions, wherein (b) the first rotating element is the carrier; (c) the second rotating element is the sun gear; and (d) the third rotating element is the ring gear, and wherein (e) the controller controls the engine, the first motor, and the second motor by temporarily relaxing a predetermined allowable rotational speed for the rotational speed of the paired pinions when the controller sets the engine in an operating state and moves the vehicle in the backward direction using power output from the engine. By virtue of the above configuration (e), when the vehicle is moved in the backward direction using the power output from the engine, a predetermined allowable rotational speed for the rotational speed of the paired pinions is temporarily relaxed, so that the rotational speed of the engine can be increased to a higher level than in a case where the relaxation is not provided. By increasing the rotational speed of the engine, the driving force is further increased.

### BRIEF DESCRIPTION OF THE DRAWINGS

FIG. 1 is a diagram illustrating the schematic configuration of a vehicle equipped with a vehicle drive apparatus according to a first embodiment.
FIG. 2 is a diagram showing the configuration of the vehicle drive apparatus shown in FIG. 1, using a collinear chart.
FIG. 3 is a collinearity diagram represents a BEV mode in which the second motor MG2 generates torque.
FIG. 4 is a collinearity diagram represents the BEV mode in which the third motor MG3 generates torque.
FIGS. 5A and 5B are collinearity diagrams illustrating a first HEV mode in which the engine is set in an operating state in operation and electric power is exchanged between the first motor and the third motor. FIG. 5A is a collinearity diagram for forward travel in which an electric power generated by the first motor generates a positive torque in the third motor. FIG. 5B is a collinearity diagram for forward travel in which, when engine braking is applied, an electric power generated by the third motor is consumed as a power consumption by the first motor in the motoring operation.
FIGS. 6A and 6B are collinearity diagrams illustrating a second HEV mode in which the engine is set in an operating state and electric power is exchanged between the second motor and the third motor. FIG. 6A is a collinearity diagram for forward travel in which an electric power generated by the second motor generates a positive torque in the third motor. FIG. 6B is a collinearity diagram for forward travel in which the electric power generated by the third motor generates a positive torque in the second motor.
FIGS. 7A and 7B are collinearity diagrams illustrating a third HEV mode in which the engine is set in an operating state and electric power is exchanged between the first motor and the second motor. FIG. 7A is a collinearity diagram for forward travel in which the electric power generated by the first motor generates a positive torque in the second motor. FIG. 7B is a collinearity diagram for forward travel in which the electric power generated by the second motor generates a positive torque in the first motor.
FIG. 8 is a collinearity diagram illustrating a backward-travel mode in which the engine is in a non-operating back-driven state and electric power is exchanged between the first motor on one hand and the second and third motors on the other.
FIG. 9 is a collinearity diagram illustrating a backward travel mode in which electric power is exchanged between the first motor on one hand and the second and third motors on the other, with the engine in operation.
FIG. 10 shows an example of drive mode switching maps used for drive mode switching control shown in FIGS. 3 to 7 and used in charge depleting (CD) travel.
FIG. 11 shows an example of drive mode switching maps used for drive mode switching control shown in FIGS. 3 to 7 and used in charge sustain (CS) travel.
FIG. 12 is an explanatory diagram illustrating the operating state of the engine in relation to the available output power and the state of charge of the battery 66 when driving in the backward direction.
FIG. 13 is a flowchart illustrating the main part of the control operation of the electronic controller, and is a flowchart illustrating the control operation that switches the drive mode when moving the vehicle in the backward direction.
FIG. 14 shows an example of a time chart when the control operation shown in the flowchart of FIG. 13 is executed.
FIG. 15 is a diagram illustrating the schematic configuration of a vehicle equipped with a vehicle drive apparatus according to a second embodiment.
FIG. 16 is a diagram showing the configuration of the vehicle drive apparatus shown in FIG. 15, using a collinearity diagram.
FIG. 17 is a collinearity diagram illustrating BEV mode in backward travel, where the engine is in a non-operating, back-driven state, and electric power is exchanged between the first motor on one hand and the second and third motors on the other.
FIG. 18 is a collinearity diagram illustrating backward travel mode in which electric power is exchanged between the first motor on one hand and the second and third motors on the other, with the engine in operation.
FIG. 19 shows an example of a time chart when the control operation shown in the flowchart of FIG. 13 is executed.

### DETAILED DESCRIPTION OF PREFERRED EMBODIMENTS

Hereinafter, embodiments of the invention will be described in detail with reference to the accompanying drawings. It is noted that figures of the drawings are simplified or deformed as needed, and each portion is not necessarily precisely depicted in terms of dimension ratio, shape, etc.

### FIRST EMBODIMENT

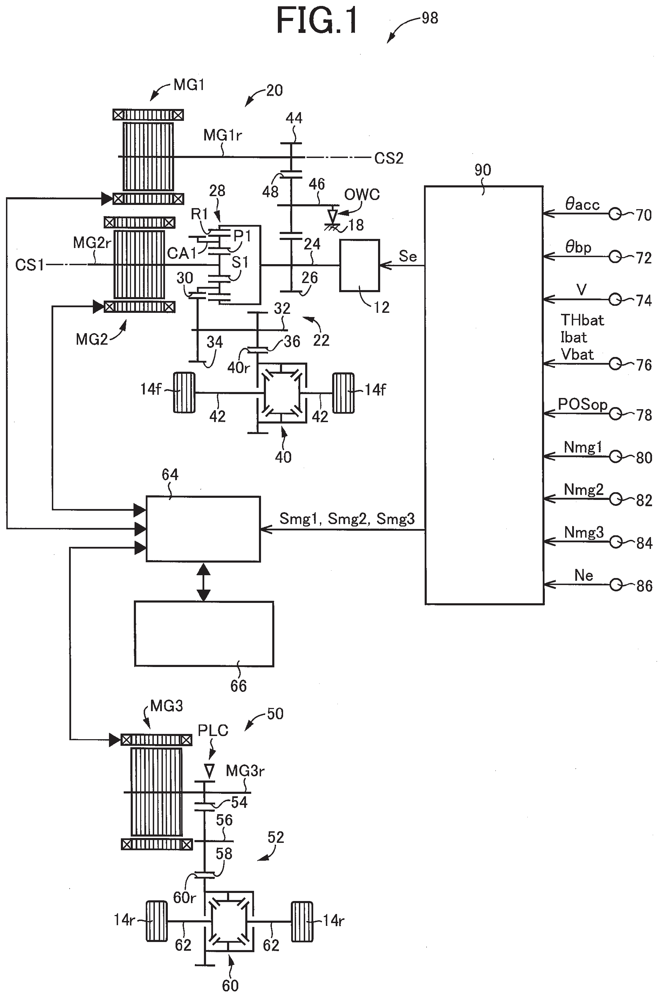

FIG. 1 is a diagram illustrating the schematic configuration of a vehicle 98 equipped with a vehicle drive apparatus 10 according to a first embodiment. In FIG. 1, the vehicle 98 comprises wheels 14 and the vehicle drive apparatus 10 that drives the wheels 14. The wheels 14 include left and right front wheels 14f and left and right rear wheels 14r. Hereinafter, "left and right front wheels 14f" will be referred to simply as "front wheels 14f," and "left and right rear wheels 14r" will be referred to simply as "rear wheels 14r." Note that the front wheels 14f and rear wheels 14r correspond to "front wheels" and "rear wheels," respectively, in this invention. The vehicle drive apparatus 10 includes a front drive unit 20 that drives the front wheels 14f and a rear drive unit 50 that drives the rear wheels 14r. Note that "left and right" above refers to left and right with respect to the forward direction of the vehicle 98.

The front drive unit 20 comprises an engine 12, a first motor MG1, a second motor MG2, and a front power transmission device 22. The rear drive unit 50 comprises a third motor MG3 and a rear power transmission device 52. The engine 12, the first motor MG1, the second motor MG2, and the third motor MG3 serve as power sources for driving the vehicle 98. The vehicle 98 is a hybrid electric vehicle (HEV) or a plug-in hybrid electric vehicle (PHEV). Furthermore, the vehicle 98 is an all-wheel drive vehicle capable of independently driving the front wheels 14f and the rear wheels 14r. All-wheel drive (AWD) and four-wheel drive (4WD) are synonymous. The vehicle drive apparatus 10 is capable of front-wheel drive, which transmits torque only to the front wheels 14f, and rear-wheel drive, which transmits torque only to the rear wheels 14r.

The engine 12 is, for example, a known internal combustion engine. An engine torque T_{c} [N·m] of the engine 12 is controlled by an engine controller (not shown) controlled by an electronic controller 90, which will be described later. The engine torque Te corresponds to "power output from the engine" in this invention. As used herein, unless otherwise specified, torque, driving force, power, and force (=power) are synonymous.

The first motor MG1, the second motor MG2, and the third motor MG3 are so-called motor generators, i.e., rotating electrical machines each having a function of a prime mover that generates mechanical power from electric power and a function of a generator that generates electric power from mechanical power. For example, the first motor MG1, the second motor MG2, and the third motor MG3 are each a synchronous motor whose rotor is rotated by a rotating magnetic field generated by the stator. The rotating magnetic field is generated by supplying multiphase alternating currents, which differ in phase from one another, to stator coils disposed on the stator. The first motor MG1, the second motor MG2, and the third motor MG3 are each connected to a battery 66 disposed in the vehicle drive apparatus 10 via an inverter 64 disposed in the vehicle drive apparatus 10.

The torques output from the first motor MG1, the second motor MG2, and the third motor MG3 are each controlled by the inverter 64 controlled by the electronic controller 90, which will be described later. The torque of the first motor MG1 is a first motor torque T_{mgl} [N· m], the torque of the second motor MG2 is a second motor torque T_{mg2} [N·m], and the torque of the third motor MG3 is a third motor torque T_{mg3} [N·m]. For example, the inverter 64 controls the magnitudes of a first motor current I_{mg1}, a second motor current I_{mg2}, and a third motor current I_{mg3} (described later), thereby controlling the first motor torque T_{mg1}, the second motor torque T_{mg2}, and the third motor torque T_{mg3}. When the motor operates as a prime mover, its torque is a motoring torque, and when the motor operates as a generator, its torque is a regenerative torque. Specifically, when the motor is rotating in the positive direction and producing a positive torque, or when the motor is rotating in the negative direction and producing negative torque, the torque is a motoring torque, and when the motor is rotating in the positive direction and producing negative torque, or when the motor is rotating in the negative direction and producing a positive torque, the torque is a regenerative torque. "Positive torque" is a torque that drives the wheel 14 in the forward direction and corresponds to the torque direction in a state in which the engine 12 is operating. "State in which the engine 12 is operating" is synonymous with a state in which the engine 12 alone is generating a positive torque. "Positive rotation" is a rotation that drives the wheel 14 in the forward direction and corresponds to the rotational direction during operation of the engine 12.

The battery 66 is an energy storage device that supplies and receives electric power to and from each of the first motor MG1, the second motor MG2, and the third motor MG3. The battery 66 corresponds to "energy storage device" in this invention. Unless otherwise specified, the first motor MG1, the second motor MG2, and the third motor MG3 are controlled via the inverter 64 such that electric power is supplied to each of them simultaneously and electric power is received from each of them simultaneously. "Simultaneously" means, for example, that each of the first motor MG1, the second motor MG2, and the third motor MG3 is capable of independently powering or regenerating at the same time. The electric power balance is achieved between the electric power generated by any one of the first motor MG1, the second motor MG2, and the third motor MG3, and the power consumption when the generated electric power is supplied and consumed to drive another motor.

The front power transmission device 22 is disposed in the power transmission path between each of the engine 12, the first motor MG1, and the second motor MG2, and the front wheels 14f. The front power transmission device 22 includes a planetary gear device 28, a drive gear 30, a driven gear 34, a final gear 36, a front differential gear 40, left and right front drive shafts 42, etc. Hereinafter, "left and right front drive shafts 42" will be referred to simply as "front drive shaft 42". The front power transmission device 22 transmits power from the engine 12, the second motor MG2, etc. to the front wheels 14f. The front drive shaft 42 corresponds to "first drive shaft" in this invention, which drives the front wheels 14f, one of the front wheels 14f and rear wheels 14r.

The planetary gear device 28 is a single-pinion type planetary gear device having a sun gear S1, a pinion Pl, a carrier CAl rotatably and revolvably supporting the pinion P1, and a ring gear Rl meshing with the sun gear S1 via the pinion Pl. The planetary gear device 28 corresponds to "differential mechanism" in the present invention. The pinion P1 corresponds to "pinion" in the present invention. The second motor MG2 is coupled to the sun gear S1 via a second rotor shaft MG2r, which is the rotor shaft of the second motor MG2. The engine 12 and the first motor MG1 are coupled to the ring gear R l. The front drive shaft 42 is coupled to the carrier C Al via the drive gear 30, the driven gear 34, a transmission shaft 32, the final gear 36, and the front differential gear 40. The drive gear 30 is coupled to the carrier CAl so as to be non-rotatable relative thereto. The driven gear 34 and the final gear 36 are both fixedly secured to the transmission shaft 32 so as to be non-rotatable relative thereto. The final gear 36 meshes with a differential ring gear 40r of the front differential gear 40.

The first motor MGl is coupled to the ring gear Rl of the planetary gear device 28 via a reduction gear 44, an intermediate gear 48, a gear 26, and an engine coupling shaft 24. The reduction gear 44 is fixedly secured to a first rotor shaft MG1r, which is the rotor shaft of the first motor MGl, so as not to rotate relative thereto. The intermediate gear 48 is fixedly secured to a transmission shaft 46 so as not to rotate relative thereto. The intermediate gear 48 meshes with the reduction gear 44 and the gear 2 6. For example, the reduction gear 44, the transmission shaft 46, the intermediate gear 48, and the gear 26 function as a reduction mechanism that rotates the engine coupling shaft 24 by the first motor MGl while reducing its rotational speed to a speed lower than that of the first motor MGl.

A one-way clutch OWC is disposed on the transmission shaft 46. The one-way clutch OWC has one end coupled to the transmission shaft 46 and the other end coupled to a non-rotating member 18. The non-rotating member 18 to which the one-way clutch OWC is coupled is, for example, a housing for accommodating the front power transmission device 22. The one-way clutch OWC restricts the rotation of the ring gear R1, which is coupled to the engine coupling shaft 24 via the intermediate gear 48 and gear 26, so as to prevent the ring gear R1 from rotating in a negative direction.

The engine 12 and the second motor MG2 are each positioned on a first axis CS1, which is the rotational centerline of the planetary gear device 28. The first motor MGl is positioned on a second axis CS2. The first axis CS1 and the second axis CS2 are different rotational centerlines that are parallel to each other.

The rear power transmission device 52 is disposed in the power transmission path between the third motor MG3 and the rear wheels 14r. The rear power transmission device 52 includes a reduction gear 54, an intermediate gear 58, a rear differential gear 60, and left and right rear drive shafts 62, etc. Hereinafter, "left and right rear drive shafts 62 " will be referred to simply as "rear drive shaft 62." The reduction gear 54 is fixedly secured to a third rotor shaft MG3r, which is the rotor shaft of the third motor MG3, so as not to rotate relative thereto. The intermediate gear 58 is fixedly secured to a transmission shaft 56 so as not to rotate relative thereto. The intermediate gear 58 meshes with the reduction gear 54 and a differential ring gear 60r of the rear differential gear 60. For example, the reduction gear 54, the intermediate gear 58, and the differential ring gear 60r function as a reduction mechanism that rotates the differential ring gear 60r by the third motor MG3 while reducing its rotational speed to a speed lower than that of the third motor MG3. The rear power transmission device 52 transmits the power from the third motor MG3 to the rear wheels 14r. The rear drive shaft 62 corresponds to "second drive shaft" in this invention, which drives the rear wheels 14r, the other of the front wheels 14f and rear wheels 14r. Thus, the third motor MG3 is coupled to the rear drive shaft 62.

The rear power transmission device 52 further includes a well-known parking mechanism PLC. One end of the parking mechanism PLC is coupled to a non-rotating member 18 (not shown). The parking mechanism PLC is operated, for example, by an electric actuator or a mechanical actuator operated by manual operation, so that the other end of the parking mechanism PLC engages with or disengages from the reduction gear 54. The non-rotating member 18 to which the parking mechanism PLC is coupled is, for example, a housing that accommodates the rear power transmission device 52. The parking mechanism PLC selectively renders the reduction gear 54 non-rotatable or rotatable, thereby selectively rendering the rear wheels 14r non-rotatable or rotatable.

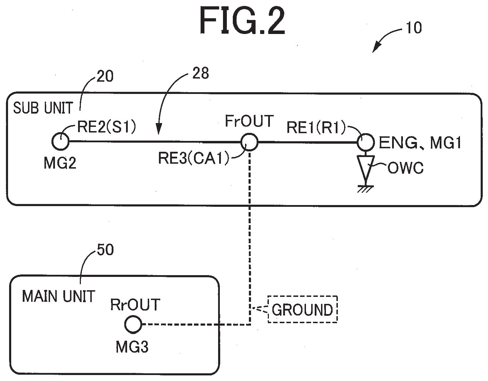

FIG. 2 is a diagram showing the configuration of the vehicle drive apparatus 10 shown in FIG. 1, using a collinear chart. In FIG. 2, the rear drive unit 50 serves, for example, as a main unit that is used for vehicle driving preferentially over the front drive unit 20. In this case, the front drive unit 20 functions as a sub unit. In FIG. 2, "FrOUT" refers to the front wheels 14f, and "RrOUT" refers to the rear wheels 14r.

The planetary gear device 28 of the front drive unit 20 has three rotating elements: a first rotating element RE1, a second rotating element RE2, and a third rotating element RE3. Respective actuators are coupled to the rotating elements RE1 to RE3 of the planetary gear device 28. The collinearity diagram of FIG. 2 is a diagram in which the three rotating elements of the planetary gear device 28 are arranged in a straight line. Expressed using the collinearity diagram, the first rotating element REl is the ring gear R1, the second rotating element RE2 is the sun gear S1, and the third rotating element RE3 is the carrier CAl. The engine 12 and the first motor MGl are coupled to the first rotating element REl. The second motor MG2 is coupled to the second rotating element RE2. The front drive shaft 42, i.e., front wheels 14f, is coupled to the third rotating element RE3.

The third motor MG3 of the rear drive unit 50 is coupled to the rear wheels 14r. Therefore, the third motor MG3 can be considered to be coupled to the front wheels 14f via the ground (see broken line). By controlling the electric power of the first motor MG1, the second motor MG2, and the third motor MG3 such that power is supplied and received among the motors in synchronism, the vehicle is enabled to travel in a state in which the third motor MG3 is regarded as being coupled to the front wheels 14f.

Referring back to FIG. 1, the electronic controller 90 is configured including a so-called microcomputer, for example, equipped with a CPU, ROM, input/output interface, etc. The CPU executes various controls of the vehicle 98 by performing signal processing according to a program prestored in the ROM, for example. The electronic controller 90 corresponds to "controller" in this invention.

The electronic controller 90 receives various signals, etc. based on detection signals from various sensors, etc. disposed in the vehicle 98. The various sensors, etc. include, for example, an accelerator opening sensor 70, a brake operation amount sensor 72, a vehicle speed sensor 74, a battery sensor 76, a shift position sensor 78, a rotational speed sensor 80, a rotational speed sensor 82, a rotational speed sensor 84, and a rotational speed sensor 86. The various signals, etc. include, for example, accelerator opening θ_{acc} [%], brake operation amount θ_{bp} [%], vehicle speed V [km/h], battery temperature TH_{bat} [°C] that is the temperature of the battery 66, battery charge/discharge current I_{bat} [A], battery voltage V_{bat} [V], shift operation position POSₒₚ, first motor rotational speed N_{mg1} [rpm], second motor rotational speed N_{mg2} [rpm], third motor rotational speed N_{mg3} [rpm], and engine rotational speed N_{c} [rpm].

The accelerator opening θ_{acc} represents the amount of accelerator operation by the driver, indicating the magnitude of the driver's acceleration operation. The brake operation amount θ_{bp} is a signal representing the magnitude of the driver's brake pedal depression operation, i.e., the magnitude of the brake operation, and is equivalent to the brake-pedal depressing force. The vehicle speed V is the speed of the vehicle 98. The shift operation position POSₒₚ is the lever position of a shift operation device (not shown) operated by the driver, such as "P," "R," "N," or "D." "P" is the lever position for the parking range. "R" is the lever position for the backward-drive range, enabling backward driving. "N" is the lever position for the neutral range. "D" is the lever position for the forward-drive range, enabling forward driving. The first motor rotational speed N_{mg1} is the rotational speed of the first motor MG1. The second motor rotational speed N_{mg2} is the rotational speed of the second motor MG2. The third motor rotational speed N_{mg3} is the rotational speed of the third motor MG3. The engine rotational speed N_{c} is the rotational speed of the engine 12.

The electronic controller 90 outputs various control signals, etc. to the devices, etc. arranged in the vehicle 98. The devices, etc. include, for example, the engine 12 and the inverter 64. The various control signals, etc. include an engine control signal S_{c} for controlling the engine 12, a first motor control signal S_{mg1} for controlling the first motor MGl, a second motor control signal S_{mg2} for controlling the second motor MG2, and a third motor control signal S_{mg3} for controlling the third motor MG3. The engine control signal S_{c} includes control signals for intake air volume, ignition timing, and fuel injection amount in order to set the engine rotational speed N_{c} and an engine torque T_{c} to their respective target values. The first motor control signal S_{mg1} includes a control signal for a first motor current I_{mg1}, which is the drive current for the first motor MGl, in order to set the first motor rotational speed N_{mg1} and a first motor torque T_{mg1} to their respective target values. The second motor control signal S_{mg2} includes a control signal for a second motor current I_{mg2}, which is the drive current for the second motor MG2, in order to set the second motor rotational speed N_{mg2} and a second motor torque T_{mg2} to their respective target values. The third motor control signal S_{mg3} includes a control signal for a third motor current I_{mg3}, which is the drive current for the third motor MG3, in order to set the third motor rotational speed N_{mg3} and a third motor torque T_{mg3} to their respective target values.

The electronic controller 90 determines the various control signals, etc. based on the driver's intentions, such as the accelerator opening θ_{acc}, the brake operation amount θ_{bp}, and the shift operation position POSₒₚ, as well as the first motor rotational speed N_{mg1}, the second motor rotational speed N_{mg2}, the third motor rotational speed N_{mg3}, and the engine rotational speed N_{c}. For example, the electronic controller 90 controls the engine 12, the first motor MGl, the second motor MG2, and the third motor MG3, which are the driving power sources, to achieve a required driving force F_{rdem} [N] by considering an available input power Wᵢₙ [W] and an available output power Wₒᵤₜ [W] from the battery 66. The available input power Wᵢₙ is a power value that defines the limit of the input power, i.e., the charging electric power, of the battery 66. The available output power Wₒᵤₜ is a power value that defines the limit of the output power, i.e., the discharging power, of the battery 66. The available output power Wₒᵤₜ corresponds to "power available from the energy storage device" in the present invention. The available input power Wᵢₙ and the available output power Wₒᵤₜ are calculated, for example, based on the battery temperature TH_{bat} and a state of charge SOC [%] of the battery 66. The state of charge SOC is the remaining charge of the battery 66, and is the ratio of the actually stored state of charge SOC to a predetermined full charge capacity of the battery 66, calculated, for example, based on the battery charge/discharge current I_{bat} and the battery voltage V_{bat}. The state of charge SOC corresponds to "charge level" in the present invention. The required driving force F_{rdem} is a driving force Fᵣ [N] required for the vehicle 98. The required driving force F_{rdem} is calculated, for example, by applying the actual accelerator opening θ_{acc} and vehicle speed V to a map which represents the relationship between the accelerator opening θ_{acc} and vehicle speed V and the required driving force F_{rdem}, which has been determined experimentally or through design and stored in advance.

Thus, configuration is such that the electronic controller 90 controls the engine 12, the first motor MG1, the second motor M2, and the third motor MG3 so as to be able to switch the drive mode to one of plural modes.

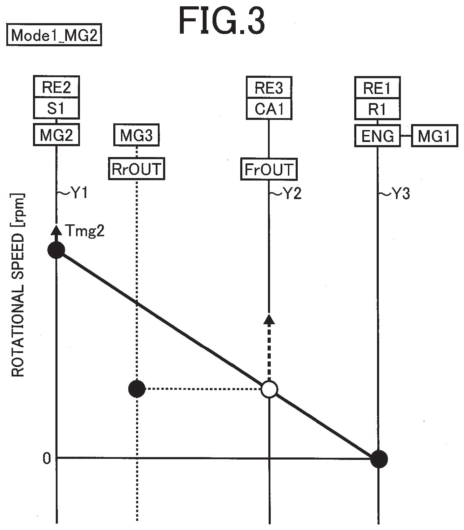

From here, the plural drive modes of the vehicle 98 will be described using FIGS. 3 to 9. FIGS. 3 to 9 are diagrams showing the relative rotational speeds of the rotating elements RE1 to RE3 of the planetary gear device 28 in the collinearity diagram of FIG. 2. In these collinearity diagrams, vertical lines Y1 to Y3 are arranged from left to right of the drawing in the order of the vertical line Y1, the vertical line Y2, and the vertical line Y3. The vertical line Y1 is the axis showing the rotational speed of the sun gear S1, which is the second rotating element RE2 to which the second motor MG2 is coupled. The vertical line Y2 is the axis showing the rotational speed of the carrier CAl, which is the third rotating element RE3 to which the front wheels 14f (see "FrOUT " in the figure) are coupled. The vertical line Y3 is the axis showing the rotational speed of the ring gear Rl, which is the first rotating element REl to which the engine 12 (see " ENG " in the figure) and the first motor MGl are coupled. The third motor MG3, coupled to the rear wheels 14r (see " RrOUT " in the figure), is shown to be coupled to the front wheels 14f via the ground. Each arrow indicates the direction of torque on the axis of each of the rotating elements RE1 to RE3. Solid arrows indicate torque output from each actuator, and broken-line arrows indicate mechanically transmitted torque. In FIGS. 3 to 9, the torques of the planetary gear device 28 are controlled so that the moment around the third rotating element RE3 coupled to the wheel 14 is zero, i.e., equilibrium is achieved.

FIG. 3 is a collinearity diagram illustrating Mode 1_MG2, which is one of Mode 1 variations capable of battery electric vehicle (BEV) travel and represents a BEV mode in which the second motor MG2 generates torque. FIG. 3 is a collinearity diagram for forward travel. In Mode 1_MG2, the engine 12 are in a non-operating state, the first motor MG 1 and the third motor MG3 are in a non-operating state, and positive torque is generated from the second motor MG2. In this case, the engine rotational speed N_{c} is set to zero by the one-way clutch OWC. In Mode 1_MG2, the rotational speed of the first rotating element RE1 is set to zero, with the result that BEV travel by the second motor MG2 is possible with the power from the battery 66. In Model_MG2, positive torque is generated in the second motor MG2, whereby torque is mechanically transmitted to the third rotating element RE 3, which is the output element of the planetary gear device 28. In Model_MG2, positive torque is generated in the third motor MG3, making it also possible to increase the driving force Fᵣ.

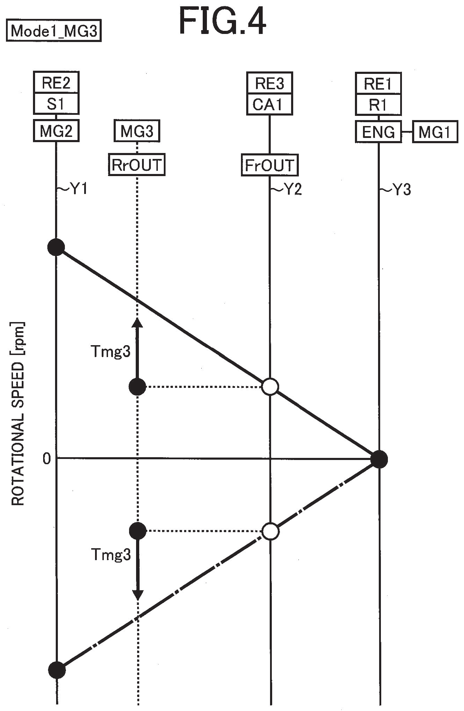

FIG. 4 is a collinearity diagram illustrating Mode 1_MG3, which is another one of Mode 1 variations capable of BEV travel and represents the BEV mode in which the third motor MG3 generates torque. In FIG. 4, the collinearity diagram for forward travel is shown as a solid line, and the collinearity diagram for backward travel is shown as a dash-dotted line. In Mode 1_MG3, the engine 12 is in a non-operating state, and the first motor MG1 and the second motor MG2 are in a non-operating state. In the case of forward travel, positive torque is generated from the third motor MG3, and in the case of backward travel, negative torque is generated from the third motor MG3. In the case of forward travel, the engine rotational speed N_{c} is set to zero by the one-way clutch OWC, while in backward travel, the engine 12 is brought into a back-driven state, but the engine rotational speed N_{c} is held at a positive rotation in the vicinity of zero due to friction torque. In Mode 1_MG3, power from battery 66 enables BEV travel by the third motor MG3. Furthermore, in Mode 1_MG3, during forward travel, positive torque is generated in the second motor MG2, making it also possible to increase the driving force Fᵣ.

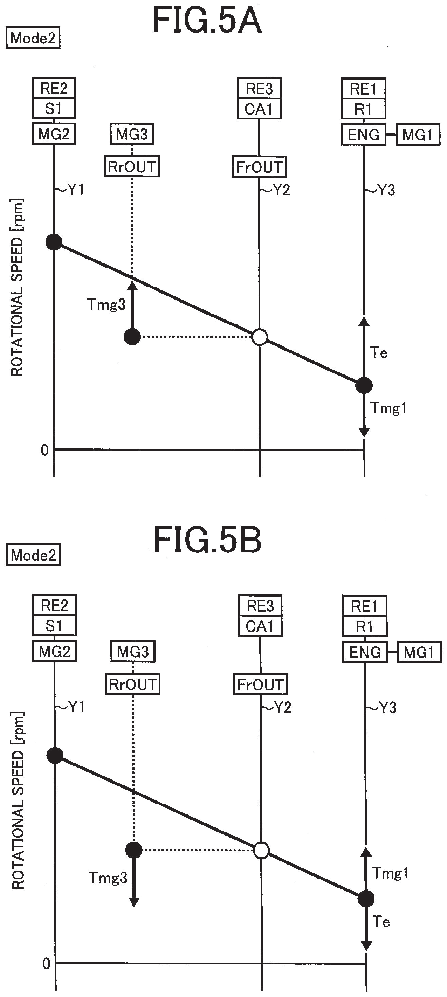

FIGS. 5A and 5B are collinearity diagrams illustrating Mode 2, i.e., a first HEV mode in which the engine 12 is set in an operating state in operation and electric power is exchanged between the first motor MG 1 and the third motor MG3. FIG. 5A is a collinearity diagram for forward travel in which an electric power W_{g1} [W] generated by the first motor MGl generates a positive torque in the third motor MG3. The power W_{g1} [W] generated by the first motor MG 1 is consumed as a power consumption Wₘ₃ [W] by the third motor MG3. FIG. 5B is a collinearity diagram for forward travel in which, when engine braking is applied, an electric power W_{g3} [W] generated by the third motor MG3 is consumed as a power consumption Wₘ₁ [W] by the first motor MG l in the motoring operation. Mode 2 is a mode enabling hybrid travel, i.e., HEV travel, and is a series mode enabling series travel with engine 12 as the power source.

In Mode 2, the combustion-induced torque vibration of the engine 12 is not transmitted to the front drive shaft 42, so that Mode 2 is advantageous in suppressing noise vibration (NV). "NV" is a general term for noise and vibration such as booming noise that occurs in the vehicle 98, and represents at least one of noise and vibration in the vehicle 98. For this reason, Mode 2 is useful for use in low-vehicle-speed, low-load ranges where quietness is required. Mode 2 is less constrained by booming noise, etc., when setting the operating point of the engine 12, for example, so that the engine 12 can be operated at a fuel-efficient operating point.

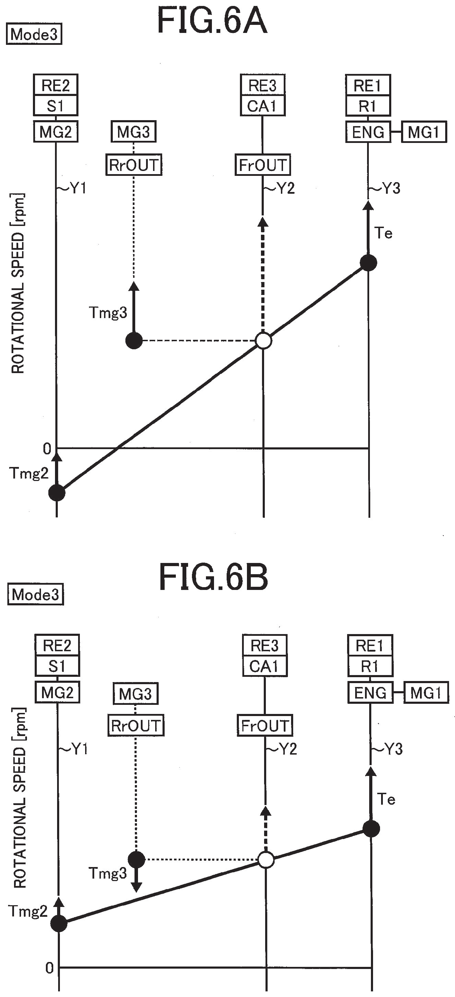

FIGS. 6A and 6B are collinearity diagrams illustrating Mode 3, i.e., a second HEV mode in which the engine 12 is set in an operating state and electric power is exchanged between the second motor MG2 and the third motor MG3. FIG. 6A is a collinearity diagram for forward travel in which an electric power W_{g2} [W] generated by the second motor MG2 generates a positive torque in the third motor MG3. In this case, the electric power W_{g2} generated by the second motor MG2 is consumed as the power consumption Wₘ₃ by the third motor MG3. FIG. 6B is a collinearity diagram for forward travel in which the electric power W_{g3} generated by the third motor MG3 generates a positive torque in the second motor MG2. In this case, the electric power W_{g3} generated by the third motor MG3 is consumed as a power consumption Wₘ₂ [W] by the second motor MG2. Mode 3 is a mode enabling HEV travel, and is an input split mode enabling input split travel with the engine 12 as the power source.

In Mode 3, the planetary gear device 28 is in a differential state, and the reaction force of the engine torque T_{c} is taken by the second motor MG2 so that the torque is mechanically transmitted to the third rotating element RE3. Mode 3 is a mode in which an electrically continuously variable transmission function capable of performing an input-split-mode operation is implemented by using the engine 12 as an input and the front wheels 14f and the rear wheels 14r as outputs. In Mode 3, it is possible to apply engine braking. "Input split," when expressed using a collinearity diagram, refers to a form in which two motors (MG2 and MG3) and one engine 12 are coupled to the three rotating elements of the differential mechanism, and the motor (MG3) is disposed as the output element (RE3). Since Mode 3 exhibits high transmission efficiency in high-load regions, Mode 3 is useful, for example, when used in low-vehicle-speed, high-load ranges. In ordinary travel in which the drive mode is switched with emphasis on, for example, energy efficiency, the vehicle drive apparatus 10 is controlled such that Mode 3 shown in FIG. 6A is performed. On the other hand, when the drive mode is switched with emphasis on, for example, driving performance, and if Mode 3 shown in FIG. 6A is not executed, the vehicle drive apparatus 10 is controlled such that Mode 3 shown in FIG. 6B is performed.

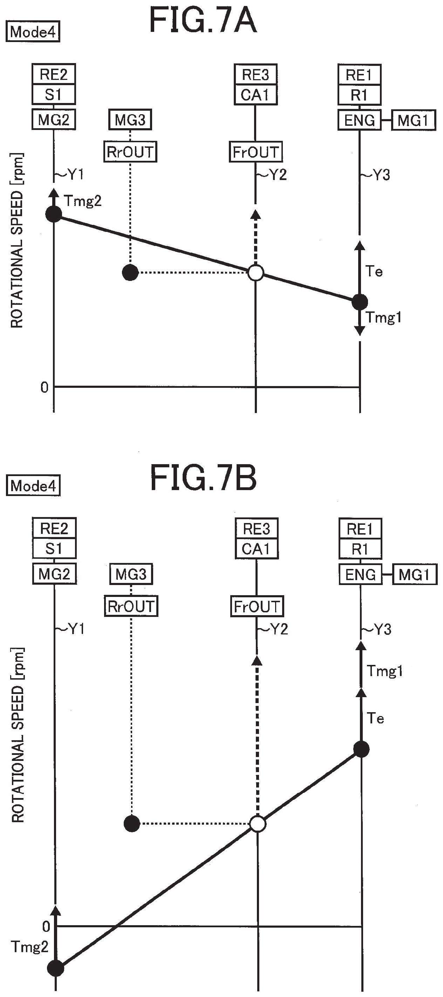

FIGS. 7A and 7B are collinearity diagrams illustrating Mode 4, i.e., a third HEV mode in which the engine 12 is set in an operating state and electric power is exchanged between the first motor MGl and the second motor MG2. FIG. 7A is a collinearity diagram for forward travel in which the electric power W_{g1} generated by the first motor MGl generates a positive torque in the second motor MG2. In this case, the electric power W_{g1} generated by the first motor MGl is consumed as the power consumption Wₘ₂ by the second motor MG2. FIG. 7B is a collinearity diagram for forward travel in which the electric power W_{g2} generated by the second motor MG2 generates a positive torque in the first motor MGl. In this case, the electric power W_{g2} generated by the second motor MG2 is consumed as the power consumption Wₘ₁ by the first motor MGl. Mode 4 is a mode enabling HEV travel, and is an output split mode enabling output split travel with engine 12 as the power source.

In Mode 4, the planetary gear device 28 is in a differential state, and the reaction force of the engine torque T_{c} is taken by the second motor MG2 so that the torque is mechanically transmitted to the third rotating element RE3. Mode 4 is a mode in which an electrically continuously variable transmission function capable of performing an output-split-mode operation is implemented by using the engine 12 as an input and the front wheels 14f as outputs. In Mode 4, it is possible to apply engine braking. "Output split," when expressed using a collinearity diagram, refers to a form in which two motors (MG1 and MG2) and one engine 12 are coupled to the three rotating elements of the differential mechanism, and the motor (MG1) is disposed as the input element (RE1) to which the engine 12 is coupled. Since Mode 4 exhibits high transmission efficiency in high-vehicle-speed regions, Mode 4 is useful, for example, when used in high-vehicle-speed ranges. In ordinary travel in which the drive mode is switched with emphasis on, for example, energy efficiency, the vehicle drive apparatus 10 is controlled such that Mode 4 shown in FIG. 7A is performed. On the other hand, when the drive mode is switched with emphasis on, for example, driving performance, and if Mode 4 shown in FIG. 7A is not executed, the vehicle drive apparatus 10 is controlled such that Mode 4 shown in FIG. 7B is performed.

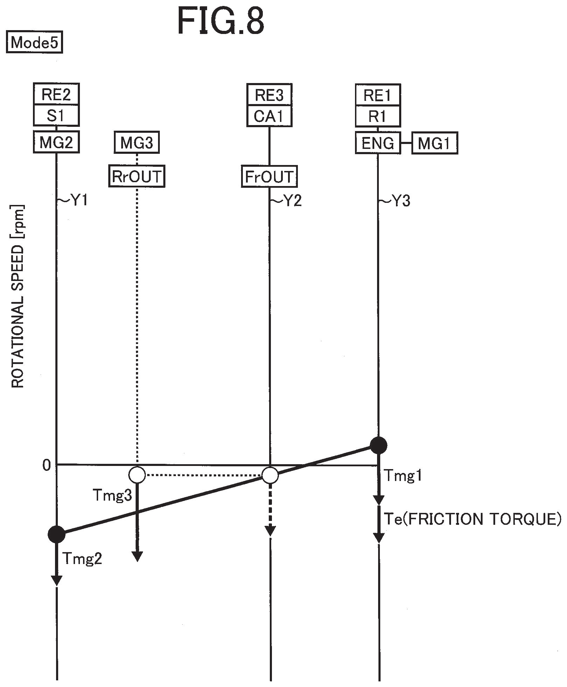

FIG. 8 is a collinearity diagram illustrating Mode 5, i.e., a backward-travel mode in which the engine 12 is in a non-operating back-driven state and electric power is exchanged between the first motor MG1 on one hand and the second and third motors MG2 and MG3 on the other. FIG. 8 is a collinearity diagram for the case of backward travel in which negative torque is generated in the second motor MG2 and the third motor MG3 using the electric power W_{g1} generated by the first motor MG1. The power W_{g1} generated by the first motor MG1 is consumed as the power consumption Wₘ₂ by the second motor MG2 and the power consumption Wₘ₃ by the third motor MG3. Note that in Mode 5, the electric power balance may or may not be achieved between the power W_{g1} generated by the first motor MG1 and the power consumption Wₘ₂ by the second motor MG2 and the power consumption Wₘ₃ by the third motor MG3. In other words, the difference between the power consumption Wₘ₂ of the second motor MG2 and the power consumption Wₘ₃ of the third motor MG3, and the electric power W_{g1} generated by the first motor MG1, may be made up from the battery 66.

Here, preferably, the distribution ratio between the power consumption Wₘ₂ by the second motor MG2 and the power consumption Wₘ₃ by the third motor MG3 is controlled to a distribution ratio α1 that reduces the sum of losses in the second motor MG2 and the third motor MG3. Note that motor losses are mainly caused by iron loss and copper loss and depend on the rotational speed of the motor and the torque output by the motor. When the vehicle 98 is at a stop, both the front wheels 14f and the rear wheels 14r are stopped, and the front drive shaft 42 and the rear drive shaft 62 are also stopped. The second motor MG2 is coupled to the front drive shaft 42 via the planetary gear device 28, and the third motor MG3 is coupled to the rear drive shaft 62. When the vehicle 98 is moved in the backward direction, even if the front drive shaft 42 is stopped, the planetary gear device 28 can enter a differential state, so that the second motor MG2 can rotate when the second motor current I_{mg2} flows. As a result, it is difficult for a high drive current to continue flowing through a single phase in the second motor MG2. On the other hand, when the rear drive shaft 62 is stopped, even when the third motor current I_{mg3} is flowing, the third motor MG3 cannot rotate. In consequence, the third motor MG3 is more likely to have a higher drive current flowing through a single phase than the second motor MG2. Thus, when the vehicle 98 is moving in the backward direction, the third motor MG3 is more likely to have a higher drive current flowing through a single phase compared to the second motor MG2, and therefore tends to have greater losses. The distribution ratio α1 is a predetermined ratio that is determined experimentally or by design in advance so that the sum of losses in the second motor MG2 and the third motor MG3 is reduced when generating the same driving force Fᵣ in the case of backward travel in Mode 5. The distribution ratio α1 is not a fixed constant ratio, but is changed based on, for example, the rotational speed N_{mg2} of the second motor and the vehicle speed V corresponding to the rotational speed N_{mg3} of the third motor. This is because the loss in the second motor MG2 and the loss in the third motor MG3 depend on the second motor rotational speed N_{mg2} and the third motor rotational speed N_{mg3}, respectively. At the start of backward travel, the vehicle speed V is zero, i.e., the rotational speed N_{mg3} of the third motor is maintained at zero revolutions. Accordingly, the predetermined ratio is set such that, for example, the electric power W_{g1} generated by the first motor MG1 is used as much as possible for the power consumption Wₘ₂ by the second motor MG2. The predetermined ratio is then set such that, as the negative vehicle speed V increases, i.e., as the negative rotational speed of the third motor rotational speed N_{mg3} increases, for example, the ratio (=Wₘ₃/W_{g1}) in which the electric power W_{g1} generated by the first motor MG1 is used for the power consumption Wₘ₃ by the third motor MG3 increases. The distribution ratio α1 corresponds to "predetermined distribution ratio" in the present invention.

In Mode 5, the planetary gear 28 is in a differential state, and torque is mechanically transmitted to the third rotating element RE3 by taking the reaction force of the second motor torque T_{mg2} from the engine 12 and the first motor MG1. The engine 12 is back-driven, and the friction torque of the engine 12 makes the engine rotational speed Nₑ a positive rotation in the vicinity of zero. The friction torque of the engine 12 is a negative torque. Also, the first motor torque T_{mg1} is a negative torque, i.e., a regenerative torque. In Mode 5, the reaction force to the second motor torque T_{mg2} is increased by using the friction torque of the engine 12 along with the first motor torque T_{mg1}.

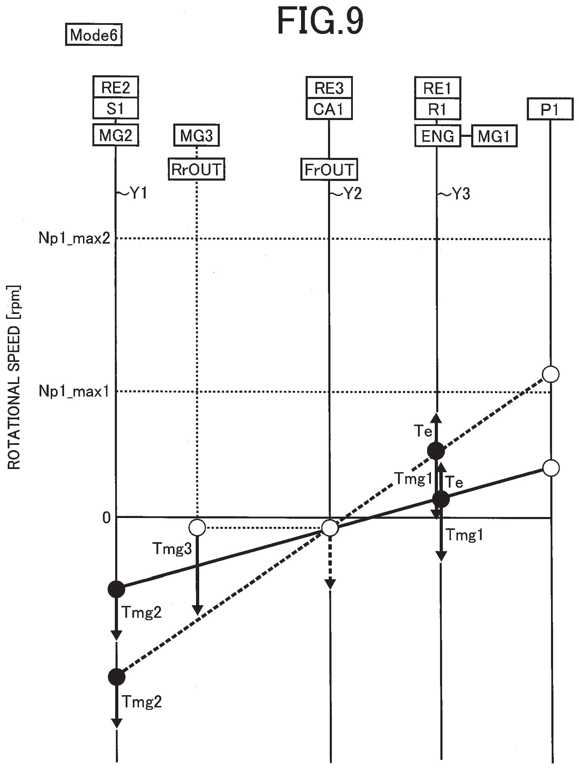

FIG. 9 is a collinearity diagram illustrating Mode 6, i.e., a backward travel mode in which electric power is exchanged between the first motor MG1 on one hand and the second and third motors MG2 and MG3 on the other, with the engine 12 in operation. The solid-line collinearity diagram in FIG. 9 represents the case where an allowable rotational speed N_{p1_max}, described later, is set to a stable allowable rotational speed value N_{p1_max1}, while the broken-line collinearity diagram in FIG. 9 represents the case where the allowable rotational speed N_{p1_max}, described later, is temporarily relaxed to a short-term allowable rotational speed value N_{p1_max2}. FIG. 9 is a collinearity diagram for backward travel in which negative torque is generated in the second motor MG2 and the third motor MG3 using the electric power W_{g1} generated by the first motor MG1. The power W_{g1} generated by the first motor MG1 is consumed as the power consumption Wₘ₂ by the second motor MG2 and the power consumption Wₘ₃ by the third motor MG3. In Mode 6, the power balance may or may not be achieved between the power W_{g1} generated by the first motor MG1 and the power consumption Wₘ₂ by the second motor MG2 and the power consumption Wₘ₃ by the third motor MG3.

Here, preferably, the distribution between the power consumption Wₘ₂ by the second motor MG2 and the power consumption Wₘ₃ by the third motor MG3 is controlled to a distribution ratio β1 that reduces the sum of losses in the second motor MG2 and the third motor MG3. The distribution ratio β1 is a predetermined ratio determined experimentally or by design in advance so that the sum of losses in the second motor MG2 and the third motor MG3 are reduced when generating the same driving force Fᵣ in the case of backward travel in Mode 6. The distribution ratio β1 is not a fixed constant ratio, but is varied based on, for example, the rotational speed N_{mg2} of the second motor and the vehicle speed V corresponding to the rotational speed N_{mg3} of the third motor. This is because the loss in the second motor MG2 and the loss in the third motor MG3 depend on the second motor rotational speed N_{mg2} and the third motor rotational speed N_{mg3}, respectively. The distribution ratio β1, like the distribution ratio α1, is a predetermined ratio set such that, as the negative vehicle speed V increases, for example, the ratio (=Wₘ₃/W_{g1}) in which the power W_{g1} generated by the first motor MG1 is used for the power consumption Wₘ₃ by the third motor MG3 increases. The distribution ratio β1 corresponds to "predetermined distribution ratio" in the present invention.

In Mode 6, the engine torque T_{c} is a positive torque. The first motor torque T_{mg1} is a negative torque, i.e., a regenerative torque. In Mode 6, the planetary gear device 28 is in a differential state, and the reaction forces of the engine torque T_{c} and the first motor torque T_{mg1} are taken by the second motor torque T_{mg2} so that torque is mechanically transmitted to the third rotating element RE3. In Mode 6, the engine torque Tₑ basically acts in a direction that cancels out the driving force Fᵣ in the backward direction, so that preferably the engine 1 2 is controlled to have high rotational speed but low torque.

The electronic controller 90 is configured to switch the drive mode based on the vehicle speed V and the travel load. The travel load is, for example, the actual value of the required driving force F_{rdem} or the driving force Fᵣ.

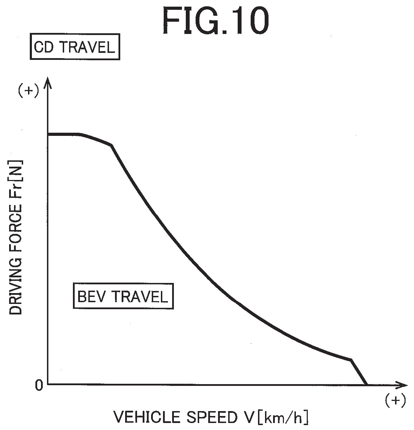

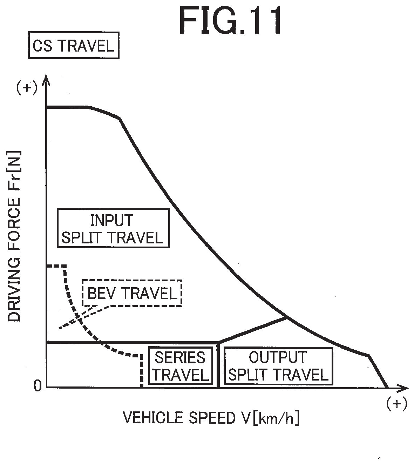

FIGS. 10 and 11 each show an example of drive mode switching maps used for drive mode switching control shown in FIGS. 3 to 7. Each of these drive mode switching maps shows a predefined relationship, with a boundary line defining the region corresponding to one of the plural modes on a two-dimensional coordinate system having the horizontal axis representing vehicle speed V and the vertical axis representing travel load. In other words, each of these drive mode switching maps represents a predefined relationship for determining which mode to set as the drive mode. Note that the switching control of drive modes Mode 5 and Mode 6 will be described separately. FIGS. 10 and 11 show the case where the travel load is the driving force Fᵣ. FIG. 10 shows a drive mode switching map used in charge depleting (CD) travel, i.e., state-of-charge consuming travel in which the vehicle travels while consuming the state of charge SOC. FIG. 11 shows a drive mode switching map used in charge sustain (CS) travel, i.e., SOC-sustaining travel in which the vehicle travels while sustaining the SOC.

FIG. 10 is used, for example, in PHEVs mounted with the battery 66 having a relatively large capacity, when the CD mode for CD travel is set. In HEVs mounted with the battery 66 having a smaller capacity compared to PHEVs, FIG. 10 may not be used. FIG. 11 is used, for example, in PHEVs, when the CS mode for CS travel is set.

If CD mode is set and there is sufficient state of charge SOC, FIG. 10 is selected, and BEV mode (Mode 1) is set across all the ranges. If CD mode is set but the state of charge SOC is low, or if CS mode is set, FIG. 11 is selected. In FIG. 11, series mode (Mode 2) is set in the low-vehicle-speed, low-load range where booming noise is likely to be a problem. Input split mode (Mode 3) is set in the high-travel-load range because it has high transmission efficiency in the high-load range. Output split mode (Mode 4) is set in the high-vehicle-speed range because it has good transmission efficiency in the high-vehicle-speed range. Even when the state of charge SOC is low and the usable range of the state of charge SOC is small, if the consumption of the state of charge SOC is acceptable, BEV mode may be set in the range where the power output from battery 66 is small. If the operating efficiency of engine 12 is poor, BEV mode may be set. In FIG. 11, the BEV mode is set in the low-vehicle-speed, low-load range depending on the state of charge SOC.

Hereinafter, description will be given of the control functions of the electronic controller 90 implemented when the driver operates the shift position POSₒₚ to "R" and the electronic controller 90 controls the vehicle 98 to move in the backward direction.

The electronic controller 90 determines whether the available output power Wₒᵤₜ from the battery 66 is equal to or greater than an electric-power threshold W_{out_jdg} [W] when moving the vehicle 98 in the backward direction, and also determines whether the state of charge SOC of the battery 66 is equal to or greater than a state-of-charge threshold SOC_{_jdg} [%]. The electric-power threshold W_{out_jdg} is the lower limit of the available output power Wₒᵤₜ from the battery 66 necessary to achieve the required driving force F_{rdem}, and is a threshold of the available output power Wₒᵤₜ that has been determined in advance experimentally or by design. The electric-power threshold W_{out_jdg} corresponds to "predetermined electric-power threshold" in the present invention. The state-of-charge threshold SOC_{_jdg} is the lower limit of the state of charge SOC that prevents the battery 66 from becoming over-discharged, and is a threshold of the state of charge SOC that has been determined in advance experimentally or by design. The state-of-charge threshold SOC_{_jdg} corresponds to "predetermined state-of-charge threshold" in the present invention.

When the electronic controller 90 determines that the available output power Wₒᵤₜ is greater than or equal to the electric-power threshold W_{out_jdg} and the state of charge SOC is greater than or equal to the state-of-charge threshold SOC_{_jdg}, it brings the engine 12 into a non-operating, back-driven state and executes backward travel control using Mode 5.

When the electronic controller 90 determines that the available output power Wₒᵤₜ is less than the electric-power threshold W_{out_jdg} or the state of charge SOC is less than the state-of-charge threshold SOC_{_jdg}, it temporarily relaxes the allowable rotational speed N_{p1_max} [rpm], brings the engine 12 into an operating state, and executes backward travel control using Mode 6. Here, a pinion rotational speed Nₚ₁ [rpm] is the rotational speed of rotation of the pinion Pl. The allowable rotational speed N_{p1_max} is the upper limit of the rotational speed that is permitted for the pinion rotational speed Nₚ₁. The allowable rotational speed N_{p1_max} is the upper limit below which the pinion P1 is not damaged and the impact on the durability of the planetary gear device 28 is within an acceptable range. The allowable rotational speed N_{p1_max} includes a stable allowable rotational speed value N_{p1_max1} (>0) for continuous rotation and a short-term allowable rotational speed value N_{p1_max2} (>0) for temporary rotation. These are predetermined rotational speed values, defined either experimentally or by design in advance. The short-term allowable rotational speed value N_{p1_max2} does not necessarily have to be a fixed, constant rotational speed value, and may vary based on the magnitude of the torque transmitted by the pinion P1 and the period during which the short-term allowable rotational speed value N_{p1_max2} is permitted. This is because the temperature of the pinion P1 that affects damage to pinion P1 depends on the pinion rotational speed Nₚ₁, the magnitude of torque transmitted by the pinion P1, and the durations of these rotational speed Nₚ₁ and magnitude of torque transmitted by the pinion P1. Similarly, the stable allowable rotational speed value N_{p1_max1} does not necessarily have to be set to a fixed constant rotational speed value and may vary based on, for example, the magnitude of torque transmitted by the pinion P1. The short-term allowable rotational speed value N_{p1_max2} (>N_{p1_max1}) is a rotational speed higher than the stable allowable rotational speed value N_{p1_max1}, but the period during which operation is permitted is limited. The above-mentioned "temporarily relaxing the allowable rotational speed N_{p1_max}" means switching (increasing) the allowable rotational speed N_{p1_max} from the stable allowable rotational speed value N_{p1_max1} to the short-term allowable rotational speed value N_{p1_max2}.

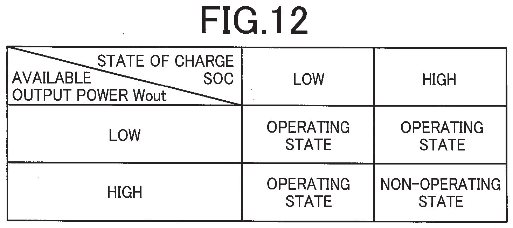

FIG. 12 is an explanatory diagram illustrating the operating state of the engine 12 in relation to the available output power Wₒᵤₜ and the state of charge SOC of the battery 66 when driving in the backward direction.

As shown in FIG. 12, when the available output power Wₒᵤₜ is high and the state of charge SOC is high, the engine 12 is kept in a non-operating state, otherwise, the engine 12 is kept in an operating state.

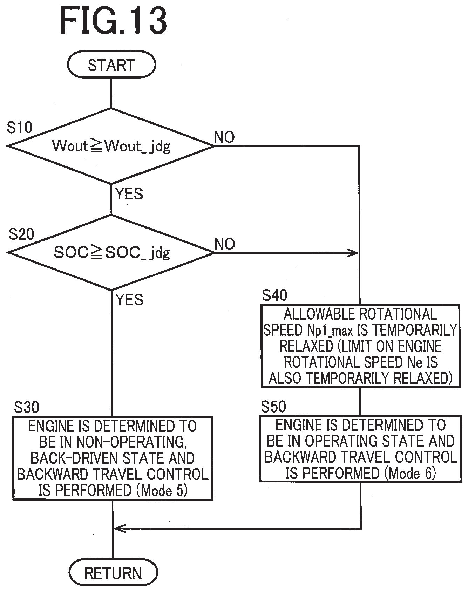

FIG. 13 is a flowchart illustrating the main part of the control operation of the electronic controller 90, and is a flowchart illustrating the control operation that switches the drive mode when moving the vehicle 98 in the backward direction.

First, at step S10 (hereinafter, "step" will be omitted), it is determined whether the available output power Wₒᵤₜ is greater than or equal to the electric-power threshold W_{out_jdg}. If the determination at S10 is affirmative, then at S20 it is determined whether the state of charge SOC is greater than or equal to the state-of-charge threshold SOC_{_jdg}. If the determination at S20 is affirmative, at S30 the engine 12 is determined to be in a non-operating, back-driven state, and backward travel control is performed using Mode 5. If the determination at S10 is negative or the determination at S20 is negative, then at S40 the allowable rotational speed N_{p1_max} is temporarily relaxed. When the allowable rotational speed N_{p1_max} is temporarily relaxed, the limit on the engine rotational speed Nₑ is also temporarily relaxed (see FIG. 9). After the execution of S40, at S50 the engine 12 is determined to be in an operating state, and backward travel control is performed using Mode 6. After the execution of S30 and S50, the system returns to the previous state.

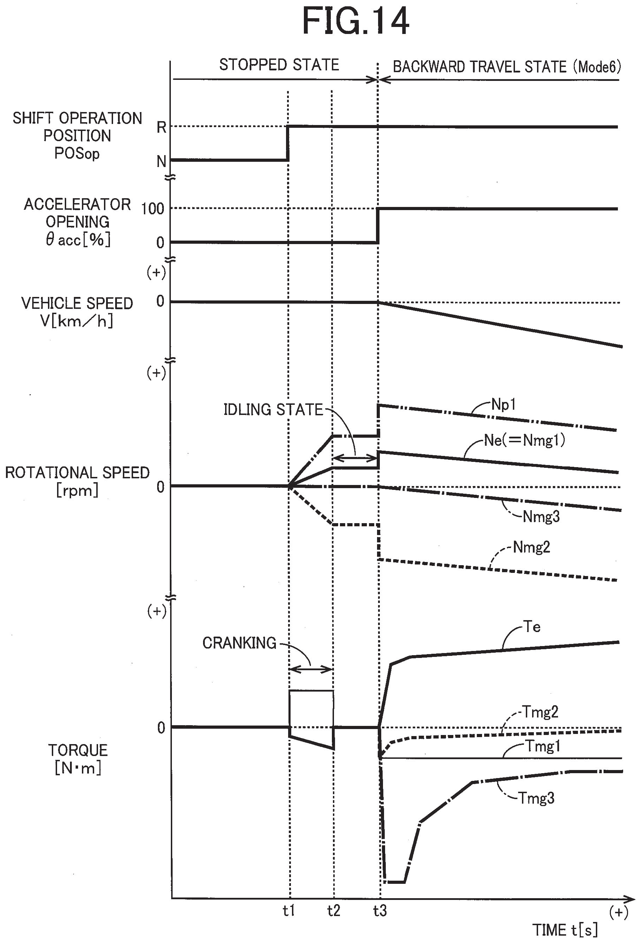

FIG. 14 shows an example of a time chart when the control operation shown in the flowchart of FIG. 13 is executed. The time chart in FIG. 14 is for the case when S40 and S50 are executed in the flowchart of FIG. 13. That is, it is for the case when the backward travel control by Mode 6 is executed. The horizontal axis of FIG. 14 is time t [s].

Prior to time t1, the vehicle 98 is stationary. At time t1, for example, the driver manually switches the shift operation position POSₒₚ from "N" to "R". From time 1 onward, the engine rotational speed Nₑ is increased by cranking by the first motor MGl. As the engine rotational speed Nₑ and the rotational speed N_{mg1} increase, the rotational speed N_{mg2} of the second motor is decreased and the pinion rotational speed Nₚ₁ is increased via the planetary gear device 28. At time t2(>t1), ignition of engine 12 is started. From time t2 onward, the engine 12 is idled. Depending on the idle engine speed Nₑ, the second motor rotational speed N_{mg2} and the pinion rotational speed Nₚ₁ are set to predetermined rotational speeds via the planetary gear device 28. At time t3 (>t2), for example, the accelerator opening θ_{acc} is changed from 0 [%] to 100 [%] by the driver 's accelerator operation. At time t3, for example, the allowable rotational speed N_{p1_max} is switched from the stable allowable rotational speed value N_{p1_max1} to the short-term allowable rotational speed value N_{p1_max2}. From time t3 onward, the engine torque Tₑ is increased, and the first motor torque T_{mg1} is controlled to a negative torque so that the first motor MG1 generates electricity. The power W_{g1} generated by the first motor MG1 is used to control the torques of the second motor MG2 and the third motor MG3 to be negative. As a result, the vehicle 98 enters the backward travel mode. The torque transmitted by the pinion P1 is large immediately after the start of backward travel, and then gradually decreases. Therefore, even if the period during which the short-term allowable rotational speed value N_{p1_max2} is allowable has elapsed and the allowable rotational speed N_{p1_max} returns from the short-term allowable rotational speed value N_{p1_max2} to the stable allowable rotational speed value N_{p1_max1}, it is possible to ensure that there is no problem with backward travel.

According to this embodiment, (a) the planetary gear device 28 has three rotating elements, i.e., the first rotating element RE1, the second rotating element RE2, and the third rotating element RE3, (b) the engine 12 and the first motor MG1 are coupled to the first rotating element RE1, the second motor MG2 is coupled to the second rotating element RE2, and the front drive shaft 42 is coupled to the third rotating element RE3, (c) the rear drive shaft 62 is coupled to the third motor MG3, and (d) when moving the vehicle 98 in the backward direction, the electronic controller 90 controls the first motor MG1, the second motor MG2, and the third motor MG3 to operate the engine 12 and move the vehicle 98 in the backward direction using the engine torque T_{c} when the available output power Wₒᵤₜ from the battery 66 is less than the electric-power threshold W_{out_jdg}. With the configuration described in (d) above, if the available output power Wₒᵤₜ from the battery 66 is less than the electric-power threshold W_{out_jdg}, the engine 12 is set to operate and the vehicle 98 is moved in the backward direction. This suppresses insufficient driving force compared to when the engine 12 is not operating and the vehicle 98 is moved in the backward direction.

According to this embodiment, (a) when moving the vehicle 98 in the backward direction, (a1) if the available output power Wₒᵤₜ from the battery 66 is greater than or equal to the electric-power threshold W_{out_jdg} and the state of charge SOC of the battery 66 is greater than or equal to the state-of-charge threshold SOC_{_jdg}, the electronic controller 90 controls the first motor MG1, the second motor MG2, and the third motor MG3 to deactivate the engine 12 and move the vehicle 98 in the backward direction without using the engine torque Tₑ, and (a2) if the available output power Wₒᵤₜ from the battery 66 is greater than or equal to the electric-power threshold W_{out_jdg} and the state of charge SOC of the battery 66 is less than the state-of-charge threshold SOC_{_jdg}, the electronic controller 90 controls the first motor MG1, the second motor MG2, and the third motor MG3 to activate the engine 12 and move the vehicle 98 in the backward direction using the engine torque Tₑ. With the configuration described in (a1) above, if the state of charge (SOC) of the battery 66 is greater than or equal to the state-of-charge threshold SOC_{_jdg}, the engine 12 is kept in a non-operating state and the vehicle 98 is moved in the backward direction. This suppresses fuel consumption by the engine 12 compared to when engine 12 is running and the vehicle 98 is moved in the backward direction. With the configuration described in (a2) above, if the state of charge (SOC) of battery 66 is less than the state-of-charge threshold SOC_{_jdg}, the engine 12 is kept running and the vehicle 98 is moved in the backward direction. This suppresses an excessive decrease in the state of charge (SOC) of the battery 66 compared to when engine 12 is kept in a non-operating state and the vehicle 98 is moved in the backward direction. In this way, depending on the state of charge (SOC) of the battery 66, fuel consumption by the engine 12 is suppressed while an excessive decrease in the state of charge (SOC) of the battery 66 is suppressed.

According to this embodiment, when bringing the engine 12 into a non-operating, back-driven state and moving the vehicle 98 in the backward direction without using the engine torque Tₑ, the electronic controller 90 generates negative torque in the first motor MG1, the second motor MG2, and the third motor MG3 while causing the engine 12 to be back driven. That is, when moving the vehicle 98 in the backward direction by Mode 5, the electronic controller 90 generates negative torque in the first motor MG1, the second motor MG2, and the third motor MG3 while causing the engine 12 to be back driven. Since the engine 12 is back-driven when the vehicle 98 is moved in the backward direction without using the engine torque Tₑ, the driving force Fᵣ is increased compared to when the engine 12 is not back-driven.

According to this embodiment, when the engine 12 is running and the vehicle 98 is moved in the backward direction using the engine torque Tₑ, the electronic controller 90 generates negative torque in the first motor MG1, the second motor MG2, and the third motor MG3. That is, when the vehicle 98 is moved in the backward direction using Mode 6, the electronic controller 90 generates negative torque in the first motor MG1, the second motor MG2, and the third motor MG3. Because negative torque is generated in the first motor MG1, the second motor MG2, and the third motor MG3 when the vehicle 98 is moved in the backward direction using the engine torque Tₑ, the driving force Fᵣ is increased compared to the case where negative torque is not generated in any of the first motor MG1, the second motor MG2, and the third motor MG3.

According to this embodiment, the electronic controller 90 controls the distribution between the power consumption Wₘ₂ by the second motor MG2 and the power consumption Wₘ₃ in the third motor MG3 to a distribution ratio α1 in Mode 5 and to a distribution ratio β1 in Mode 6. By controlling the distribution between the power consumption Wₘ₂ by the second motor MG2 and the power consumption Wₘ₃ by the third motor MG3 to the distribution ratios α1 and β1, losses are suppressed while the driving force Fᵣ is increased.

According to this embodiment, (a) the planetary gear device 28 is a single-pinion type planetary gear device having the sun gear S1, the carrier Ca1, the ring gear R1, and the pinion P1; (b) the first rotating element REl is the ring gear Rl; (c) the second rotating element RE2 is the sun gear S1; (d) the third rotating element RE3 is the carrier Cal; and (e) when the electronic controller 90 sets the engine 12 in an operating state and moves the vehicle 98 in the backward direction using the engine torque Tₑ, it temporarily relaxes the allowable rotational speed N_{p1_max} for the pinion rotational speed Nₚ₁ and controls the engine 12, the first motor MG1, and the second motor MG2. With the configuration of (e) above, when the vehicle 98 is moved in the backward direction using the engine torque Tₑ, the allowable rotational speed N_{p1_max} for the pinion rotational speed Nₚ₁ is temporarily relaxed, so that the engine rotational speed Nₑ can be increased compared to when it is not relaxed. By increasing the engine rotational speed Nₑ, the driving force Fr is increased.

### SECOND EMBODIMENT

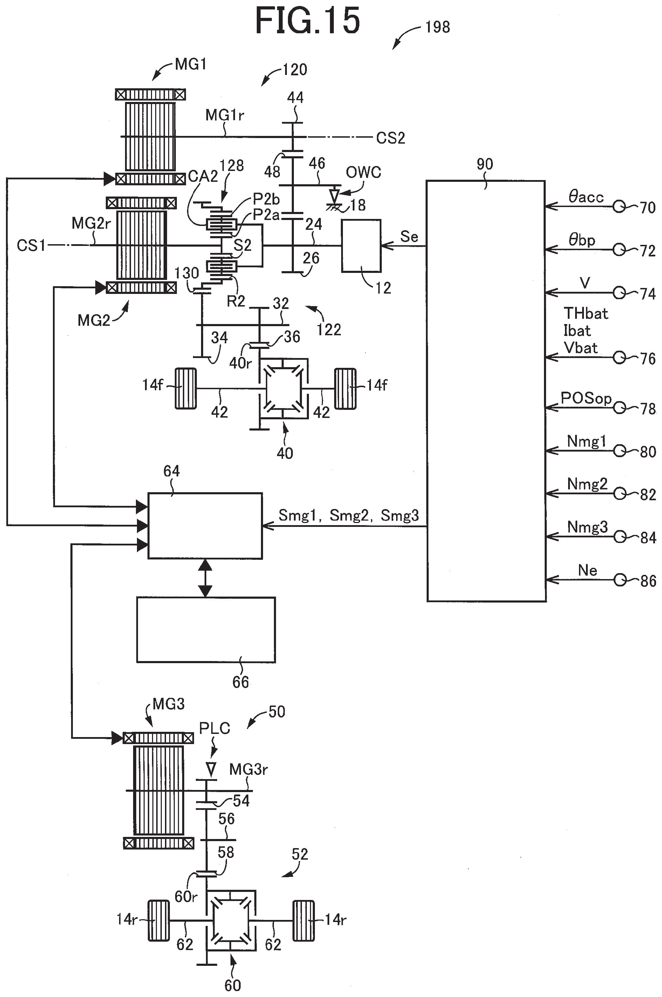

FIG. 15 is a diagram illustrating the schematic configuration of a vehicle 198 equipped with a vehicle drive apparatus 110 according to a second embodiment. The vehicle drive apparatus 110 has substantially the same configuration as the vehicle drive apparatus 10 according to the first embodiment described above, but the main difference is that the front drive unit 20 is replaced with a front drive unit 120. The front drive unit 120 has substantially the same configuration as the front drive unit 20, but the main difference is that the planetary gear device 28 is replaced with a planetary gear device 128. Therefore, in this embodiment, the description will focus on the parts that differ from the first embodiment, and parts that are substantially common in function with the first embodiment will be given the same reference numerals and their explanations will be omitted as appropriate.

The vehicle drive apparatus 110 includes a front drive unit 120 that drives the front wheels 14f and the rear drive unit 50 that drives the rear wheels 14r. The front drive unit 120 includes the engine 12, the first motor MG1, the second motor MG2, and a front power transmission device 122. The front power transmission device 122 has substantially the same configuration as the front power transmission unit 22, but instead of a planetary gear device 28, it includes a planetary gear device 128. The planetary gear device 128 is a double-pinion type planetary gear device having a sun gear S2, a pinion P2, a carrier CA2 that supports the pinion P2 so that it can rotate and revolve, and a ring gear R2 that meshes with the sun gear S2 via the pinion P2. The planetary gear device 128 corresponds to "differential mechanism" in the present invention. The pinion P2 includes plural pairs of inner-circumferential pinions P2a and outer-circumferential pinions P2b that mesh with each other to form a pair. The pinion P2 corresponds to both "pinion" and "paired pinions" in the present invention. The second motor MG2 is coupled to the sun gear S2. The engine 12 and the first motor MG1 are coupled to the carrier CA2. The front drive shaft 42 is coupled to the ring gear R2 via a drive gear 130, the driven gear 34, the transmission shaft 32, the final gear 36, and the front differential gear 40. The drive gear 130 is coupled to the ring gear R2 in a way that prevents relative rotation. The first motor MG1 is coupled to the carrier CA2 of the planetary gear device 128 via the reduction gear 44, the intermediate gear 48, the gear 26, and the engine coupling shaft 24.

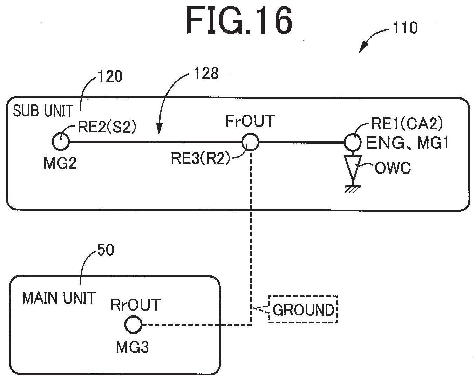

FIG. 16 is a diagram showing the configuration of the vehicle drive apparatus 110 shown in FIG. 15, using a collinearity diagram. The planetary gear device 128 of the front drive unit 120 has three rotating elements, i.e., the first rotating element RE1, the second rotating element RE2, and the third rotating element RE3. The rotating elements RE1 to RE3 of the planetary gear device 128 are coupled to respective actuators. Expressed using a collinearity diagram, the first rotating element REl is the carrier C A2, the second rotating element RE2 is the sun gear S2, and the third rotating element RE3 is the ring gear R2. The engine 12 and the first motor MG1 are coupled to the first rotating element REl. The second motor MG2 is coupled to the second rotating element RE2. The front drive shaft 42, i.e., the front wheels 14f are coupled to the third rotating element RE3.

In the vehicle drive apparatus 110, as in the vehicle drive apparatus 10 according to the first embodiment described above, the electronic controller 90 controls the engine 12, the first motor MG1, the second motor MG2, and the third motor MG3. The electronic controller 90 is configured to switch the drive mode based on the vehicle speed V and the travel load. For example, as in the first embodiment described above, the electronic controller 90 is configured to be able to switch the drive mode to any one of the drive modes from Mode 1 to Mode 6. In this embodiment, the only difference from the first embodiment described above is that the actuators coupled to the rotating elements RE1 to RE3 of the planetary gear device 128 are different from those in the first embodiment, so the explanations of Mode 1 to Mode 4 will be omitted.

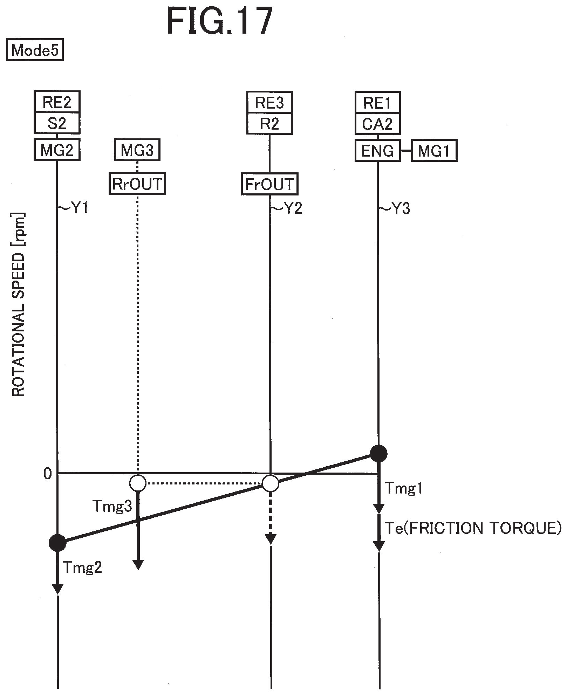

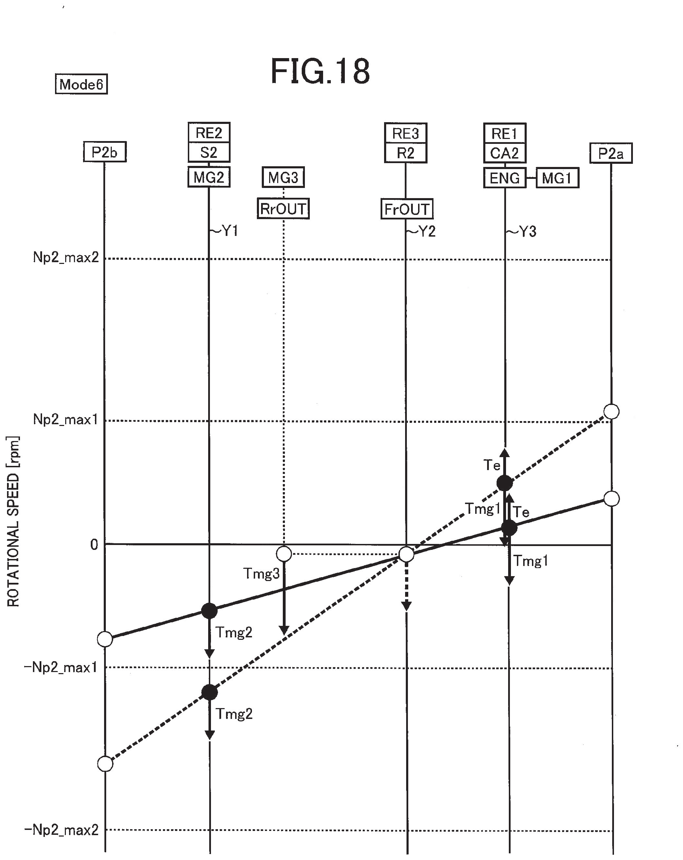

FIGS. 17 and 18 show the relative rotational speeds of the rotating elements RE1 to RE3 of the planetary gear device 128 in the collinearity diagram of FIG. 16. In these collinearity diagrams, vertical lines Y1 to Y3 are arranged from left to right of the figure in the order of vertical line Yl, vertical line Y2, and vertical line Y3. The vertical line Yl is the axis showing the rotational speed of the sun gear S2, which is the second rotating element RE2 to which the second motor MG2 is coupled. The vertical line Y2 is the axis showing the rotational speed of the ring gear R2, which is the third rotating element RE3 to which the front wheels 14f (see " FrOUT " in the figure) are coupled. The vertical line Y3 is the axis showing the rotational speed of the carrier CA2, which is the first rotating element RE1 to which the engine 12 (see "ENG" in the figure) and the first motor MG1 are coupled.

FIG. 17 is a collinearity diagram illustrating Mode 5, i.e., BEV mode in backward travel, where the engine 12 is in a non-operating, back-driven state, and electric power is exchanged between the first motor MG1 on one hand and the second and third motors MG2 and MG3 on the other. The collinearity diagram in FIG. 17 corresponds to the collinearity diagram in FIG. 8 in the first embodiment, and the only difference is that the actuators coupled to the rotating element RE1 to RE3 of the planetary gear device 128 are different from those in the first embodiment, so detailed explanations will be omitted. In Mode 5, as in the first embodiment described above, the distribution between the power consumption Wₘ₂ by the second motor MG2 and the power consumption Wₘ₃ by the third motor MG3 is controlled to a distribution ratio α2 that reduces the sum of losses in the second motor MG2 and the third motor MG3. The distribution ratio α2 is a predetermined ratio, determined experimentally or by design in advance, such that the sum of losses in the second motor MG2 and the third motor MG3 is reduced when generating the same driving force Fᵣ in the case of backward travel in Mode 5. The distribution ratio α2 is not a fixed constant ratio, but is varied based on, for example, the rotational speed N_{mg2} of the second motor and the vehicle speed V corresponding to the rotational speed N_{mg3} of the third motor. The distribution ratio α2 corresponds to "predetermined distribution ratio" in the present invention.

FIG. 18 is a collinearity diagram illustrating Mode 6, i.e., backward travel mode in which electric power is exchanged between the first motor MG1 on one hand and the second and third motors MG2 and MG3 on the other, with the engine 12 in operation. The solid-line collinearity diagram in FIG. 18 represents the case where an allowable rotational speed N_{p2_max}, described later, is set to a stable allowable rotational speed value N_{p2_max1}, while the broken-line collinearity diagram in FIG. 18 represents the case where the allowable rotational speed N_{p2_max}, described later, is temporarily relaxed to a short-term allowable rotational speed value N_{p2_max2}. The collinearity diagram in FIG. 18 corresponds to the collinearity diagram of FIG. 9 in the first embodiment, differing in that the actuators coupled to the rotating elements RE1 to RE3 of the planetary gear device 1 28 are different from those in the first embodiment. In Mode 6, similar to the first embodiment described above, the distribution between the power consumption Wₘ₂ by the second motor MG2 and the power consumption Wₘ₃ by the third motor MG3 is controlled to a distribution ratio β2 that reduces the sum of losses in the second motor MG2 and the third motor MG3. The distribution ratio β2 is a predetermined ratio that is determined experimentally or by design in advance to reduce the sum of losses in the second motor MG2 and the third motor MG3 when generating the same driving force Fᵣ in the case of backward travel in Mode 6. The distribution ratio β2 is not a fixed constant ratio, but is changed based on, for example, the rotational speed N_{mg2} of the second motor and the vehicle speed V corresponding to the rotational speed N_{mg3} of the third motor. The distribution ratio β2 corresponds to "predetermined distribution ratio" in the present invention.

When attempting to increase the engine rotational speed Nₑ, the absolute values of both the pinion rotational speed Nₚ₂ₐ [rpm] and the pinion rotational speed N_{p2b} [rpm] become large. Therefore, when executing the backward travel control using Mode 6 with the engine 12 running, the allowable rotational speed N_{p2_max} [rpm] is temporarily relaxed. Here, the pinion rotational speed Nₚ₂ₐ is the spin speed of the inner pinion P2a, and the pinion rotational speed N_{p2b} is the spin speed of the outer pinion P2b. The allowable rotational speed N_{p2__max} is the upper limit of the rotational speeds that are allowed for the pinion rotational speeds Nₚ₂ₐ and N_{p2b}. The allowable rotational speed N_{p2_max} is the upper limit below which the pinion P2 is not damaged and the impact on the durability of the planetary gear device 128 remains within an acceptable range. The allowable rotational speed N_{p2_max} includes a stable allowable rotational speed value N_{p2_max1} (>0) that allows continuous rotation, and a short-term allowable rotational speed value N_{p2_max2} (>0) that allows temporary, short-term rotation. These are predetermined rotational speed values that are defined experimentally or by design. Note that the short-term allowable rotational speed value N_{p2_max2} does not necessarily have to be a fixed constant rotational speed value; for example, it may be varied based on the magnitude of the torque transmitted by the pinion P2 and the period during which the short-term allowable rotational speed value N_{p2_max2} is permitted. This is because the temperature of the pinion P2, which affects damage to the pinion P2, depends on the pinion rotational speeds Nₚ₂ₐ and N_{p2b}, the magnitude of the torque transmitted by the pinion P2, and the duration of these pinion rotational speeds Nₚ₂ₐ and N_{p2b} and the magnitude of the torque transmitted by the pinion P2. Similarly, the stable allowable rotational speed value N_{p2_max1} does not necessarily have to be set to a fixed, constant rotational speed value; for example, it may be changeable based on the magnitude of the torque transmitted by the pinion P2. The short-term allowable rotational speed value N_{p2_max2} (>N_{p2_max1}) is a rotational speed higher than the stable allowable rotational speed value N_{p2_max1}, but the period during which operation is permitted is limited. The above-mentioned "temporarily relaxing the allowable rotational speed N_{p2_max}" means switching the allowable rotational speed N_{p2_max} from the stable allowable rotational speed value N_{p2_max1} to the short-term allowable rotational speed value N_{p2_max2}.

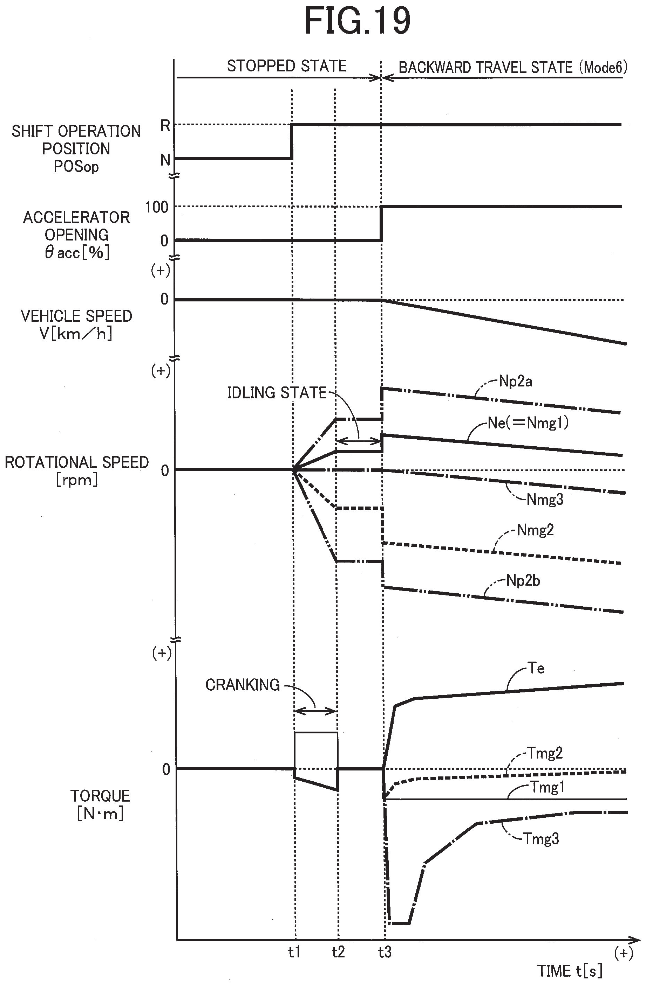

FIG. 19 shows an example of a time chart when the control operation shown in the flowchart of FIG. 13 is executed. The time chart of FIG. 19 is substantially the same as the time chart of FIG. 14 in the first embodiment, but differs in that the pinion rotational speeds Nₚ₂ₐ and N_{p2b} are used instead of the pinion rotational speed Nₚ₁. The horizontal axis of FIG. 19 is time t [s].

In backward travel, the pinion rotational speed Nₚ₂ₐ is positive rotation, and the pinion rotational speed N_{p2b} is negative rotation. At time t3, for example, the allowable rotational speed N_{p2_max} is switched from the stable allowable rotational speed value N_{p2_max1} to the short-term allowable rotational speed value N_{p2_max2}. Note that the torque transmitted by the pinion P2 is large immediately after the start of backward travel and gradually decreases thereafter. Therefore, even if the period during which the short-term allowable rotational speed value N_{p2_max2} is permitted has elapsed and the allowable rotational speed N_{p2_max} is returned from the short-term allowable rotational speed value N_{p2_max2} to the stable allowable rotational speed value N_{p2_max1}, it is possible to ensure that there is no problem with backward travel.

According to this embodiment, since it has the same configuration as the first embodiment, it achieves the same effects as the first embodiment based on that configuration.

According to this embodiment, (a) the planetary gear device 128 is a double-pinion type planetary gear device having the sun gear S2, the carrier CA2, the ring gear R2 and the paired pinion P2, (b) the first rotating element REl is the carrier CA2, (c) the second rotating element RE2 is the sun gear S2, (d) the third rotating element RE3 is the ring gear R2, and (e) when the electronic controller 90 operates the engine 12 and moves the vehicle 198 in the backward direction using the engine torque Tₑ, it temporarily relaxes the allowable rotational speed N_{p2_max} for the pinion rotational speeds Nₚ₂ₐ and N_{p2b} to control the engine 12, the first motor MG1, and the second motor MG2. With the above configuration (e), when the vehicle 198 is moved in the backward direction using the engine torque Tₑ, the allowable rotational speed N_{p2_max} for the pinion rotational speeds Nₚ₂ₐ and N_{p2b} is temporarily relaxed, whereby the engine rotational speed Nₑ can be increased compared to when it is not relaxed. By increasing the engine rotational speed Nₑ, the driving force Fᵣ is increased.

The above examples are embodiments of the present invention, and the present invention can be carried out in various modified and improved forms based on the knowledge of those skilled in the art, without departing from its spirit.

In the first embodiment described above, a form is such that, in the planetary gear device 28, the first rotating element REl is the ring gear R1, the second rotating element RE2 is the sun gear S1, and the third rotating element RE3 is the carrier CA1. However, the present invention is not limited to the form. The first rotating element REl may be either the ring gear Rl or the sun gear S1, and the second rotating element RE2 may be the other of the ring gear Rl and the sun gear S1. When the first rotating element REl is the sun gear S1 and the second rotating element RE2 is the ring gear R1, the engine 12 and the first motor MGl are coupled to the sun gear S1, and the second motor MG2 is coupled to the ring gear Rl.

In the second embodiment described above, a form is such that, in the planetary gear device 128, the first rotating element REl is the carrier CA2, the second rotating element RE2 is the sun gear S2, and the third rotating element RE3 is the ring gear R2. However, the present invention is not limited to the form. The first rotating element REl may be either the carrier CA2 or the sun gear S2, and the second rotating element RE2 may be the other of the carrier CA2 and the sun gear S2. When the first rotating element REl is the sun gear S2 and the second rotating element RE2 is the carrier CA2, the engine 12 and the first motor MG1 are coupled to the sun gear S2, and the second motor MG2 is coupled to the carrier CA2.

In the first and second embodiments described above, the first motor MG1 and the planetary gear devices 28 and 128 are coupled via the gears, but they may also be coupled together by, for example, a chain and sprocket. Furthermore, the first motor MGl may be coupled to the first rotating element RE1 without the reduction mechanism.

In the first and second embodiments described above, the first motor MG1 is positioned on the second axis CS2 that is different from the first axis CS1 of the engine 12 and the second motor MG2, but it may also be positioned on the first axis CS1, for example.

In the first and second embodiments described above, the one-way clutch OWC is disposed to prevent negative rotation of the first rotating element REl. However, instead of the one-way clutch OWC, a brake mechanism to prevent rotation of the first rotating element REl may be disposed. If the brake mechanism is disposed, the electronic controller 90 controls the system to engage the brake mechanism as needed for each drive mode. For example, when the engine 12 is in a non-operating state, the brake mechanism is brought into an engaged state to prevent rotation of the first rotating element REl, thereby implementing the drive mode of Mode 1_MG2.

In the first and second embodiments described above, the one-way clutch OWC is not necessarily required. In this case, Mode 1_MG2 of Mode 1 is not executed during forward travel. Note that in Mode 1_MG3, BEV travel is possible even without the one-way clutch OWC.

In the first and second embodiments described above, a form is such that the distribution between the power consumption Wₘ₂ by the second motor MG2 and the power consumption Wₘ₃ by the third motor MG3 is controlled to the distribution ratios α1 and α2 in Mode 5, while the distribution therebetween is controlled to the distribution ratios β1 and β2 in Mode 6. However, the present invention is not limited to the form. For example, a form may be such that, irrespective of the magnitude of the negative vehicle speed V, the electric power W_{g1} generated by the first motor MG1 may be preferentially used for the power consumption Wₘ₂ by the second motor MG2, and the remainder may be used for the power consumption Wₘ₃ by the third motor MG3.

In the first and second embodiments described above, a form is such that, in Mode 5, negative torque is generated by the first motor MG1, the second motor MG2, and the third motor MG3. However, the present invention is not limited to the form. For example, a form may be such that, in Mode 5, negative torque is generated by the first motor MG1 and either the second motor MG2 or the third motor MG3. In other words, a form can be such that the engine 12 is set in a non-operating state, and the vehicles 98 and 198 are moved in the backward direction without using engine torque T_{c}.

In the first and second embodiments described above, a form is such that, in Mode 6, negative torque is generated by the first motor MG1, the second motor MG2, and the third motor MG3. However, the present invention is not limited to the form. For example, a form may be such that, in Mode 6, negative torque is generated by the first motor MG1 and either the second motor MG2 or the third motor MG3. In other words, a form can be such that the engine 12 is set in operation and the vehicles 98 and 198 are moved in the backward direction using the engine torque T_{c}.

In the first and second embodiments described above, a form is such that by the electronic controller 90 the vehicle drive apparatus drives the vehicles 98 and 198 in the backward direction in the following manner: (a1) when the available output power Wₒᵤₜ is greater than or equal to the electric-power threshold W_{out_jdg} and the state of charge SOC is greater than or equal to the state-of-charge threshold SOC_{_jdg}, the vehicles 98 and 198 are driven in the backward direction by Mode 5; and (a2) when the available output power Wₒᵤₜ is greater than or equal to the electric-power threshold W_{out_jdg} and the state of charge SOC is less than the state-of-charge threshold SOC_{_jdg}, the vehicles 98 and 198 are driven in the backward direction by Mode 6. However, the present invention is not limited to the form. For example, a form may be such that, if the available output power Wₒᵤₜ is greater than or equal to the electric-power threshold W_{out_jdg}, the vehicles 98 and 198 are driven in the backward direction by Mode 5 for a predetermined period of time, irrespective of whether the state of charge SOC is greater than or equal to the state-of-charge threshold SOC_{_jdg}. "Predetermined period of time" referred to herein is a predetermined period that is determined experimentally or by design in advance depending on the state of charge SOC to prevent the battery 6 from becoming over-discharged.

In the first and second embodiments described above, a form is such that the allowable rotational speed N_{p1_max} or the allowable rotational speed N_{p2_max} is temporarily relaxed in Mode 6, but the present invention is also applicable to a form in which it is not relaxed. In such a form, the pinion rotational speed Nₚ₁ and the pinion rotational speeds Nₚ₂ₐ and N_{p2b} in Mode 6 are limited to the stable allowable rotational speed value N_{p1_max1} or the stable allowable rotational speed value N_{p2_max1}, respectively.

In the first and second embodiments described above, either the front wheels 14f or the rear wheels 14r to which power from the engine 12 and the second motor MG2 is transmitted may be the rear wheels 14r, and the other of the front wheels 14f and the rear wheels 14r to which power from the third motor MG3 is transmitted may be the front wheels 14f. In other words, the rear drive shaft 62 may be the "first drive shaft" and the front drive shaft 42 may be the "second drive shaft."

In the first and second embodiments described above, a form is such that since it is assumed in PHEV that BEV travel using Mode 1_{_MG3} will be frequently used, the rear drive unit 50 having the third motor MG3 is used as the main unit. However, in HEV, the front drive units 20 and 120 having the engine 12 and the second motor MG2 may be used as the main engine.

### NOMENCLATURE OF ELEMENTS

10, 110: vehicle drive apparatus
12: engine
14f: left and right front wheels (front wheels)
14r: left and right rear wheels (rear wheels)
28, 128: planetary gear device (differential mechanism)
42: left and right front drive shafts (first drive shaft)
62: left and right rear drive shafts (second drive shaft)
66: battery (energy storage device)
90: electronic controller (controller)
98, 198: vehicle
CA1, CA2: carrier
MG1: first motor
MG2: second motor
MG3: third motor
Nₚ₁: pinion rotational speed (rotational speed of rotation of the pinion)
N_{p1_max}: allowable rotational speed (predetermined allowable rotational speed)
Nₚ₂ₐ, N_{p2b}: pinion rotational speed (rotational speed of the paired pinions)
N_{p2_max}: allowable rotational speed (predetermined allowable rotational speed)
P1: pinion(pinion)
P2: pinion (pinion, paired pinions)
R1, R2: ring gear
REl: first rotating element
RE2: second rotating element
RE3: third rotating element
S1, S2: sun gear
SOC: state of charge (charge level)
SOC_{_jdg}: state-of-charge threshold
Te: engine torque (power output from the engine)
Wₘ₂: power consumption (power consumption by the second motor)
Wₘ₃: power consumption (power consumption by the third motor)
Wₒᵤₜ: available output power (power available from the energy storage device)
W_{out_jdg}: electric-power threshold (predetermined electric-power threshold)
α1, α2: distribution ratio (predetermined distribution ratio)
β1, β2: distribution ratio (predetermined distribution ratio)

## Claims

1. A vehicle drive apparatus (10; 110) comprising:
an engine (12); a first motor (MG1); a second motor (MG2); a third motor (MG3); a differential mechanism (28; 128); an energy storage device (66) for supplying electric power to and receiving electric power from each of the first motor, the second motor, and the third motor; a first drive shaft (42) for driving either front wheels (14f) or rear wheels (14r); a second drive shaft (62) for driving the other of the front wheels and the rear wheels; and a controller (90) for controlling the engine, the first motor, the second motor, and the third motor, wherein
the differential mechanism includes three rotating elements including a first rotating element (REl), a second rotating element (RE2), and a third rotating element (RE3), wherein
the engine and the first motor are coupled to the first rotating element; the second motor is coupled to the second rotating element; and the first drive shaft is coupled to the third rotating element, wherein
the third motor is coupled to the second drive shaft, and wherein
the controller controls the engine to set in an operating state and controls the first motor, the second motor, and the third motor using power output (Te) from the engine to move a vehicle in a backward direction when the vehicle drive apparatus drives the vehicle (98; 198) in the backward direction and electric power (Wₒᵤₜ) available from the energy storage device is less than a predetermined electric-power threshold (W_{out_jdg}).

2. The vehicle drive apparatus (10; 110) of claim 1, wherein
when the vehicle drive apparatus drives the vehicle (98; 198) in the backward direction, the controller (90) controls the first motor (MG1), the second motor (MG2), and the third motor (MG3) to set the engine in a non-operating state and moves the vehicle in the backward direction without using power output (Te) from the engine (12) when electric power (Wₒᵤₜ) available from the energy storage device (66) is greater than or equal to a predetermined electric-power threshold (W_{out_jdg}) and the state (SOC) of charge of the energy storage device is greater than or equal to a predetermined state-of-charge threshold (SOC_{_jdg}), and wherein
when the vehicle drive apparatus drives the vehicle in the backward direction, the controller controls the first motor, the second motor, and the third motor to set the engine in an operating state and uses power output from the engine to move the vehicle in the backward direction when electric power available from the energy storage device is greater than or equal to the predetermined electric-power threshold and the state of charge of the energy storage device is less than the predetermined state-of-charge threshold.

3. The vehicle drive apparatus (10; 110) of claim 1 or 2, wherein
the controller (90) causes the first motor (MG1), the second motor (MG2), and the third motor (MG3) to generate negative torque while allowing the engine (12) to be back-driven when the controller sets the engine in a non-operating state and moves the vehicle (98; 198) in the backward direction without using power output (Te) from the engine.

4. The vehicle drive apparatus (10; 110) of claim 3, wherein
the controller (90) controls a distribution ratio between power consumption (Wₘ₂) by the second motor (MG2) and power consumption (Wₘ₃) by the third motor (MG3) to a predetermined distribution ratio (α1, β1; α2, β2) that reduces the sum of losses in the second motor and the third motor.

5. The vehicle drive apparatus (10; 110) of claim 1 or 2, wherein
the controller (90) causes the first motor (MG1), the second motor (MG2), and the third motor (MG3) to generate negative torque when the controller sets the engine (12) in an operating state and moves the vehicle (98; 198) in the backward direction using power output (Te) from the engine.

6. The vehicle drive apparatus (10; 110) of claim 5, wherein
the controller (90) controls a distribution ratio between power consumption (Wₘ₂) by the second motor (MG2) and power consumption (Wₘ₃) by the third motor (MG3) to a predetermined distribution ratio (α1, β1; α2, β2) that reduces the sum of losses in the second motor and the third motor.

7. The vehicle drive apparatus (10) of claim 5, wherein
the differential mechanism (28) is a single-pinion type planetary gear device having a sun gear (S1), a carrier (CAl), a ring gear (Rl), and a pinion (P1), wherein
the first rotating element (REl) is the ring gear;
the second rotating element (RE2) is the sun gear; and
the third rotating element (RE3) is the carrier, and wherein
the controller (90) controls the engine (12), the first motor (MG1), and the second motor (MG2) by temporarily relaxing a predetermined allowable rotational speed (N_{p1_max}) for the rotational speed (Nₚ₁) of the pinion when the controller sets the engine in an operating state and moves the vehicle (98) in the backward direction using power output (Te) from the engine.

8. The vehicle drive apparatus (110) of claim 5, wherein
the differential mechanism (128) is a double-pinion type planetary gear device having a sun gear (S2), a carrier (CA2), a ring gear (R2), and paired pinions (P2), wherein
the first rotating element (REl) is the carrier;
the second rotating element (RE2) is the sun gear; and
the third rotating element (RE3) is the ring gear, and wherein
the controller (90) controls the engine (12), the first motor (MG1), and the second motor (MG2) by temporarily relaxing a predetermined allowable rotational speed (N_{p2_max}) for the rotational speed (Nₚ₂ₐ, N_{p2b}) of the paired pinions when the controller sets the engine in an operating state and moves the vehicle (198) in the backward direction using power output (Te) from the engine.
